# EUROPÄISCHE PATENTSCHRIFT

(11) **EP 0 742 270 B1**
(45) Veröffentlichungstag und Bekanntmachung des Hinweises auf die Patenterteilung: **10.07.2002**
(21) Anmeldenummer: 96106797.2
(22) Anmeldetag: 30.04.1996
(51) Int. Cl.: C09B 67/22, C09B 62/26, C09B 62/10, C09B 62/517

(54) **Phthalocyaninreaktivfarbstoffmischung**
Mixtures of phthalocyanine reactive dyes
Mélange de colorants réactifs de phtalocyanine

(30) Priorität: 12.05.1995 DE 19517503
(43) Veröffentlichungstag der Anmeldung: 13.11.1996
(73) Patentinhaber: DyStar Textilfarben GmbH & Co. Deutschland KG, 60318 Frankfurt am Main (DE)
(72) Erfinder: Reddig, Wolfram, Dr., 51573 Leverkusen (DE); Herd, Karl-Josef, Dr., 51519 Odenthal (DE); Harms, Wolfgang, Dr., 51519 Odenthal (DE)

(56) Entgegenhaltungen:
- EP-A- 0 044 483
- EP-A- 0 371 332
- EP-A- 0 525 572
- EP-A- 0 542 079
- EP-A- 0 596 323
- EP-A- 0 613 929
- DE-A- 4 237 883
- US-A- 3 822 263
- F.LEHR DYES AND PIGMENTS Bd. 14, Nr. 4, 1990, Seiten 239 - 263

## Beschreibung

Die Erfindung betrifft Mischungen von Phthalocyaninreaktivfarbstoffen, die beim Färben von Cellulosefasern oder Celluloseregeneratfasern ein gegenüber den Einzelkomponenten verbessertes Warenbild und ein verbessertes Kombinationsverhalten mit Reaktivgelbfarbstoffen bei der Erstellung von Grünfärbungen besitzen und neue Farbstoffe.

Das bei der Erstellung von Türkisfärbungen sowie von brillanten Grünfärbungen auf Fasermaterialien aus nativen oder regenerierten Cellulosefasersubstraten bzw. auf Mischungen derartiger Fasermaterialien mit synthetischen Fasermaterialien aus Polyester, Polyacrylnitril oder Polyamid erhaltene Warenbild zeigt im Vergleich zu der Egalität einer nach dem Stand der Technik hergestellten Blau-, Gelb- oder Rotfärbung sowie deren Kombinationsfärbungen zu üblichen Modetönen eine sehr stark vom Fasermaterial sowie von den Beleuchtungsbedingungen abhängige Einschränkung der Egalität. Diese für Phthalocyaninreaktivfarbstoffe typische Einschränkung der Egalität wird in der Fachsprache als Schipprigkeit bzw. "Skitteriness" bezeichnet.

Man versteht darunter eine Faserunegalität, welche darauf beruht, daß die im Faserkollektiv vereinigten Cellulosefasern eine unterschiedliche Farbstoffaufnahme zeigen, welche sich in Abhängigkeit vom Betrachtungswinkel in einem unruhigen Warenbild äußert. Die sogenannte Schipprigkeit von Phthalocyaninfärbungen wird besonders deutlich und verstärkt sich beim Färben von Grüntönen, d.h. bei der kombinierten Anwendung von Phthalocyaninreaktivfarbstoffen und Pyridon- sowie Pyrazolonazoreaktivfarbstoffen. Zur Überwindung des Schipprigfärbens von Phthalocyaninreaktivfarbstoffen wurden eine Reihe von Verfahren angegeben, um insbesondere durch Zusatz von Hilfsmitteln zum Färbebad bzw. durch Bildung der Lithiumsalze der Phthalocyaninreaktivfarbstoffe im Färbebad, die Gleichmäßigkeit der Anfärbung der Einzelfasern durch den Phthalocyaninreaktivfarbstoff zu verbessern. Diese Methode ist jedoch mit dem Nachteil verbunden, daß das Abwasser der Färbung zusätzlich mit Faserquell- oder Farbstofflösemitteln angereichert ist, deren ökologische Akzeptanz eingeschränkt bzw. deren Entfernung aus den Abwässern mit hohen Kosten verbunden ist.

Nach T.A. Konkova und L.I. Belenkij Tekstilnaja Prom. 27, 4, 66-68 (1967) bestehen gegenüber binären Mischungen unterschiedlicher Reaktivität und Substantivität von Farbstoffen starke Bedenken hinsichtlich Unegalität und Unsicherheit der Farbnuance.

Bei der Anwendung von Phthalocyaninreaktivfarbstoffen nach Klotzverfahren zur Erstellung von Türkisfärbungen bzw. von brillanten Grünfärbungen auf Fasermaterialien aus nativen oder regenerierten Cellulosefasersubstraten bzw. auf Mischungen derartiger Fasermaterialien mit synthetischen Fasermaterialien aus Polyester oder Polyamid erhält man ein Warenbild, welches im Vergleich zu der Egalität einer nach dem Stand der Technik hergestellten Blau-, Gelb- oder Rotfärbung sowie deren Kombinationsfärbungen zu üblichen Modetönen eine sehr starke vom Fasermaterial sowie von den Beleuchtungsbedingungen abhängige Einschränkung der Egalität aufweist. Diese für Phthalocyaninreaktivfarbstoffe typische Einschränkung der Egalität beruht auf dem unterschiedlichen Fixierverhalten eines Phthalocyaninfarbstoffs auf den natürlichen und regenerierten Cellulosefasern.

Dies wird besonders deutlich bei Gegenwart eines Gelbfarbstoffs, welcher ein abweichendes Klotz- und Fixierverhalten aufweist.

Das Auseinanderfallen einer Türkis/Grünmischung beim Färben nach Klotzverfahren ist sowohl bei Baumwolle als auch bei Celluloseregeneratfasern bekannt. Die beim Färben mit Kupferphthalocyaninfarbstoffen in Kombination mit gelben Azofarbstoffen erhältlichen Färbungen zeigen das Problem der Faserunegalität (Schipprigkeit) und des Farbablaufs (Tonverschiebung durch bevorzugte Aufnahme von Türkis aus dem Klotztrog).

Beim Foulardieren wird aus dem Chassis bevorzugt der Phthalocyaninfarbstoff aufgenommen. Beim Klotz-Kaltverweil-Verfahren wird anschließend auf große Rollen aufgewickelt, so daß der zunächst geklotzte Anteil im Innern des Warenwickels zum Lagern kommt. Beim anschließenden Waschprozeß wird aber die äußere Lage zuerst der Kontinue-Waschanlage zugeführt. Damit lagert der innere Anteil des Warenwickels länger.

Bei großen Unterschieden der Fixiergeschwindigkeit des Türkis- und Gelbanteils muß somit beim Verweilen eine zusätzliche Farbverschiebung auftreten, wenn der Türkisanteil langsamer fixiert als der Gelbanteil, d.h. bei den in der Praxis üblichen Verweilzeiten des Warenwickel besteht am Ende des Fixierprozesses bei den bisher bekannten Grünfärbungen häufig ein Unterschied im Fixierbad von Gelb und Türkis zwischen den inneren und äußeren Lagen eines aufgedockten Textilmaterials. Dadurch wird von den äußeren Lagen beim Nachwaschen der Färbung mehr Türkis ausgewaschen als von den inneren Lagen.

Zur Überwindung des langsamen Fixierverhaltens von Phthalocyaninreaktivfarbstoffen wurden eine Reihe von Verfahren angegeben, um insbesondere durch Zusatz von Hilfsmitteln zum Klotzbad die Gleichmäßigkeit der Anfärbung der Einzelfasern durch den Phthalocyaninreaktivfarbstoff sowie die Neigung zum Farbablauf zu verbessern. Diese Methode ist jedoch mit dem Nachteil verbunden, daß das Abwasser der Färbung zusätzlich mit Faserquell- oder Farbstofflösemitteln angereichert ist, deren ökologische Akzeptanz eingeschränkt bzw. deren Entfernung aus den Abwässern mit hohen Kosten verbunden ist.

Aus EP-A 596 323 sind Phthalocyanin-Reaktivfarbstoffmischungen bekannt, die wenigstens einen Phthalocyaninvinylsulfonyl-Reaktivfarbstoff, wenigstens einen Phthalocyaninfluorchlorpyrimidinyl-Reaktivfarbstoff und/oder wenigstens einen Phthalocyaninmonochlortriazinyl-Reaktivfarbstoff enthalten.

Aus EP-A 44 483 ist ein Verfahren zum Färben von Cellulosefasern bekannt, wobei mindestens zwei verschiedene Reaktivfarbstoffe eingesetzt werden, deren Färbungen auf Cellulose den gleichen Farbton ergeben und die eine jeweils um mindestens den Faktor 10 verschiedene Reaktivität besitzen.

US 3,822,263 offenbart neue Farbstoffe, die einen Fluorpyrimidyl-Reaktivrest aufweisen.

Ein Verfahren zur Herstellung von u.a. Phthalocyanin-Reaktivfarbstoffen durch kontinuierliche Umsetzung von Halogenpyrimidinen mit Aminen wird in EP-A 542 079 beschrieben.

Der Erfindung liegt die Aufgabe zugrunde, Phthalocyaninreaktivfarbstoffmischungen zur Erstellung von Türkis-und Grünfärbungen bereitzustellen, die bei guter Fixierausbeute unter praxisgerechten Färbebedingungen ein gegenüber den Einzelfarbstoffen verbessertes Warenbild ergeben und sich insbesondere für das Reaktivklotzfärbeverfahren eignen, wobei die Rest- und Spülflotten AOX-frei sein sollen.

Die Farbstoffmischung sollte eine hohe Löslichkeit und Elektrolytunempfindlichkeit aufweisen und bei variablen Temperatur-, Alkali- und Flottenbedingungen ein im zeitlichen Verlauf nuancenkonstantes, flächenegales und reproduzierbares Färbeverhalten zeigen.

Die vorliegende Erfindung betrifft eine Farbstoffmischung aus wenigstens zwei Phthalocyaninreaktivfarbstoffen, welche eine unterschiedliche Reaktivgruppe aufweisen, dadurch gekennzeichnet, daß wenigstens ein chlorfreier Phthalocyaninfluorpyrimidinylreaktivfarbstoff 2 und wenigstens ein Phthalocyaninvinylsulfonylreaktivfarbstoff 1 und/oder ein Phthalocyaninmonochlortriazinylreaktivfarbstoff 3 enthalten ist.

Die Erfindung betrifft weiterhin ein Klotzverfahren unter Verwendung einer Mischung von Phthalocyaninreaktivtürkisblaufarbstoffen in Kombination mit einer Mischung von Gelbreaktivfarbstoffen zum Färben von Cellulosefasern oder Celluloseregeneratfasern, welches ein gegenüber der Verwendung der Einzelkomponenten verbessertes Warenbild aufweist.

Überraschenderweise wurde gefunden, daß sich die Egalität des Warenbildes von Phthalocyaninreaktivfärbungen auf Cellulosefasern anstelle durch Zusatz von Hilfsmitteln durch Mischungen unterschiedlicher Phthalocyaninreaktivfarbstoffe erreichen läßt, insbesondere durch Mischungen von Phthalocyaninreaktivfarbstoffen, welche unterschiedliche Reaktivgruppen aufweisen.

Bevorzugte Farbstoffe 1 sind: 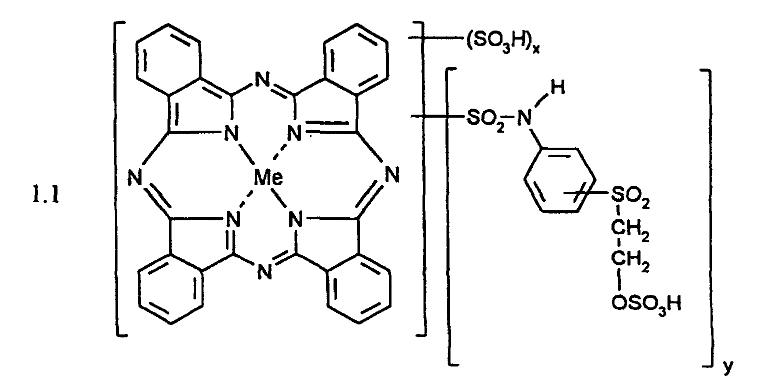 wobei
Me = Metallatom,
x = 1 bis 3, insbesondere 1,5 bis 2,
y = 1 bis 3, insbesondere 1 bis 2, speziell 1,3 bis 1,8 und
x + y = etwa von 3 bis 4, beispielsweise der Struktur 1.2: 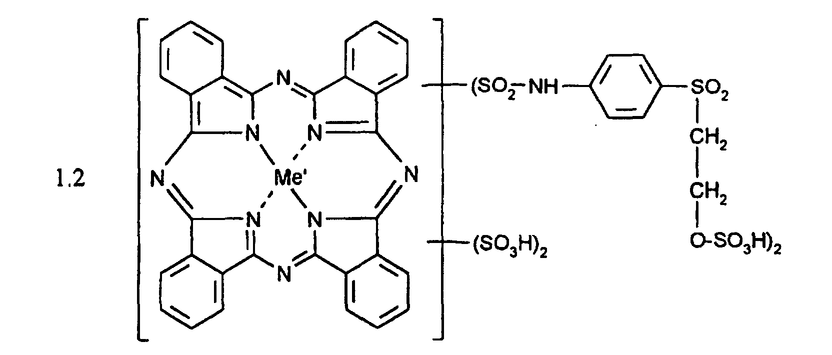 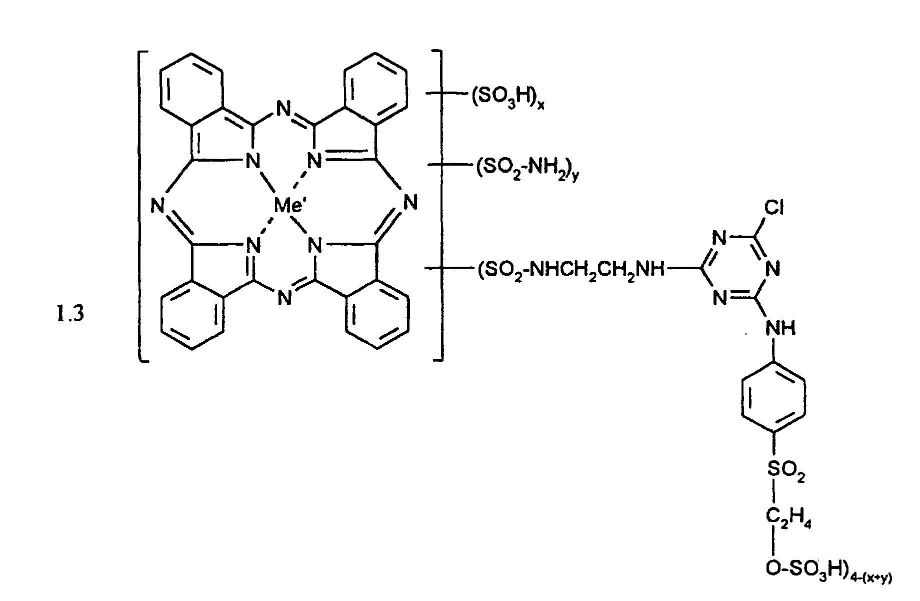 mit
x = 0,8 bis 1,5
y = 0,2 bis 0,5
Me' = Cu oder Ni

In einer bevorzugten Ausführungsform der Verbindung 1.1 steht der Rest -SO₂-CH₂-CH₂-OSO₃H in p-Stellung.

Bevorzugte Farbstoffe 2 entsprechen der Formel: 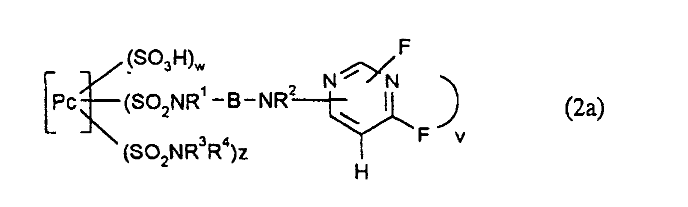 worin
Pc = Rest eines Kupfer- oder Nickelphthalocyanins,
B = gegebenenfalls substituierte Arylen-, Aralkylen- oder gegebenenfalls substituierte Alkylenbrücke oder direkte Bindung,
R¹, R², R³, R⁴ = unabhängig voneinander Wasserstoff, gegebenenfalls substituierter Alkyl- oder Arylrest
und wobei -NR¹-B-NR²- auch 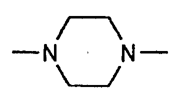 und
-NR³R⁴ auch 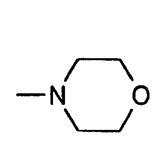 sein kann,
w, z = unabhängig voneinander eine Zahl von 0 bis 3
v = Zahl von 0,5 bis 2,0, insbesondere 0,8 bis 1,5 ist.

Vorzugsweise beträgt w+v+z = 3,0 bis 4,0.

Bevorzugte Arylen-, Aralkylen- und Alkylenbrücken B sind o-, m- und p-Phenylen, mit CH₃, SO₃H oder CO₂H substituiertes o-, m- oder p-Phenylen, Ethylen, Propylen, -CH₂-CH(CH₃)-, -(CH₂)₄-, -(CH₂)₅-, 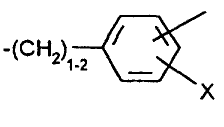 und 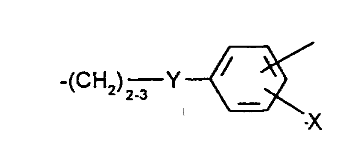 wobei
X = H, CH₃, CO₂H, SO₃H
Y = O, S, NR¹.

Bevorzugte Alkylreste R¹ bis R⁴ sind C₁-C₄-Alkyl oder mit OH, SO₃H, OSO₃H oder CO₂H substituierte C₁-C₄-Alkylreste.

Bevorzugte Arylreste R¹ bis R⁴ sind Phenyl und mit OH, SO₃H oder CO₂H substituierte Phenylreste.

Ganz besonders bevorzugt sind Farbstoffe der Formeln 2.1, 2.2 und 2.3. 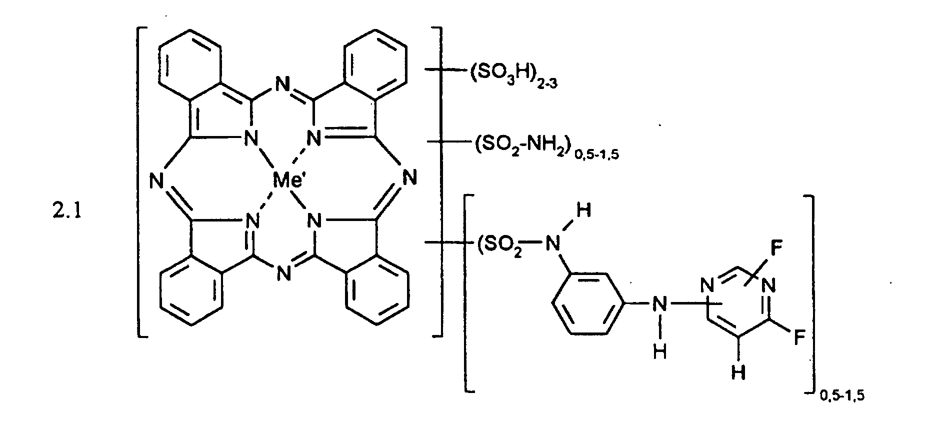 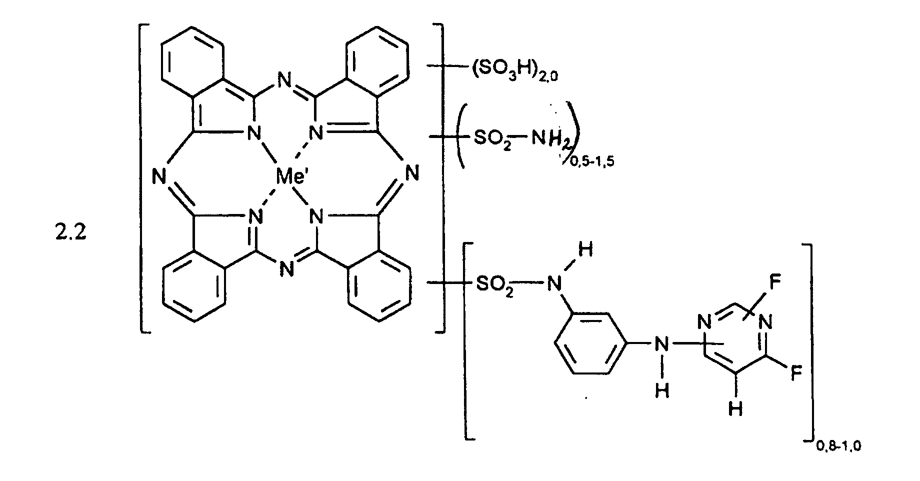 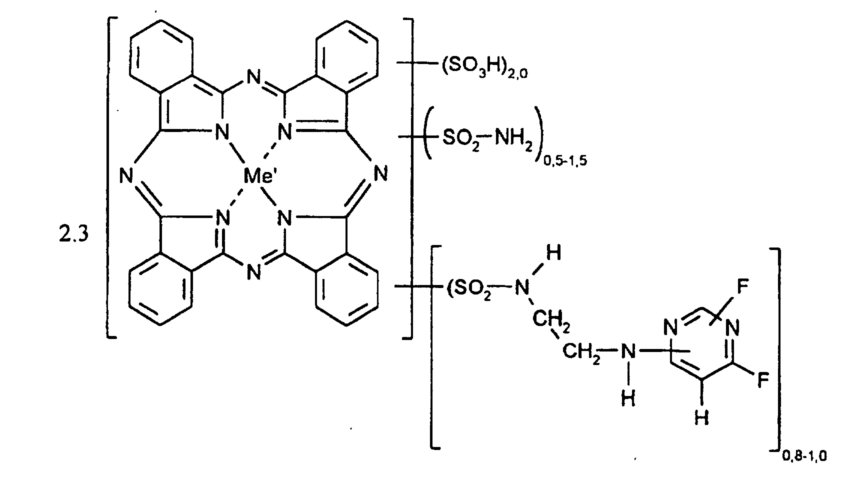 mit
Me' = Cu oder Ni.

Bevorzugte Farbstoffe 3 sind: 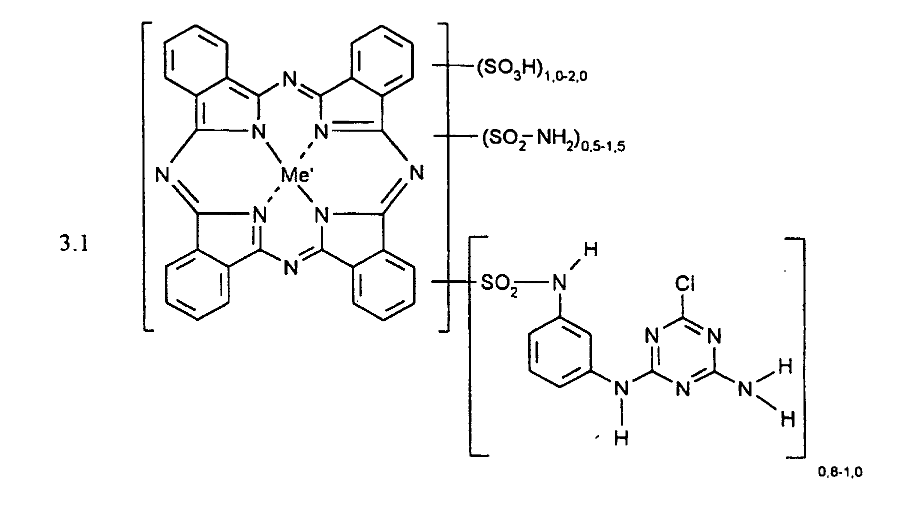 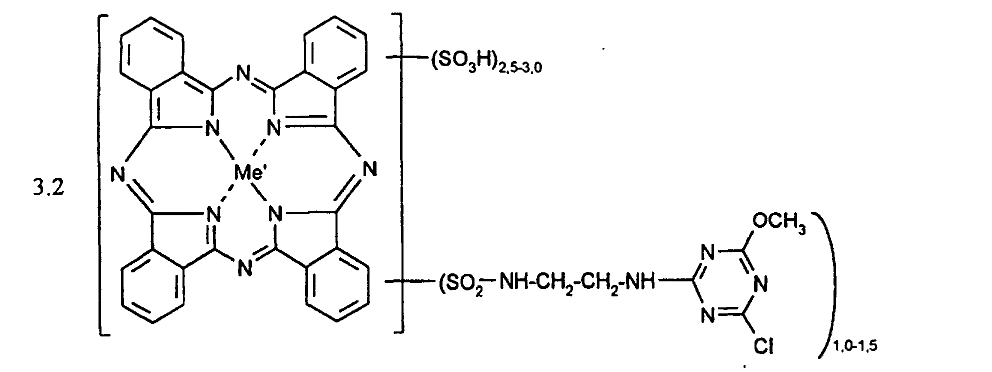 mit
Me' = Cu oder Ni
wobei es sich bei der Angabe der Zahl der Substituenten jeweils um statistische Mittelwerte handelt.

In einer bevorzugten Ausführungsform ist eine Reaktivfarbstoffgelbmischung aus dem Farbstoff 4, 5 oder 6 und dem Farbstoff 7, 8 oder 9 der im folgenden angegebenen Strukturen zusätzlich enthalten:

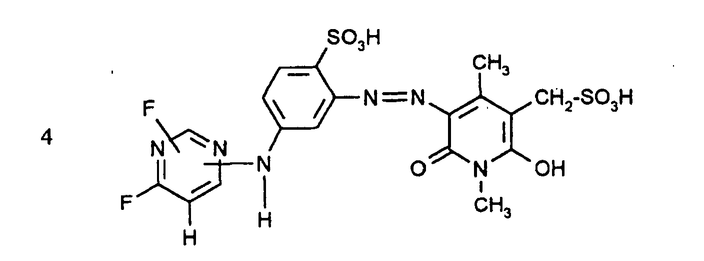

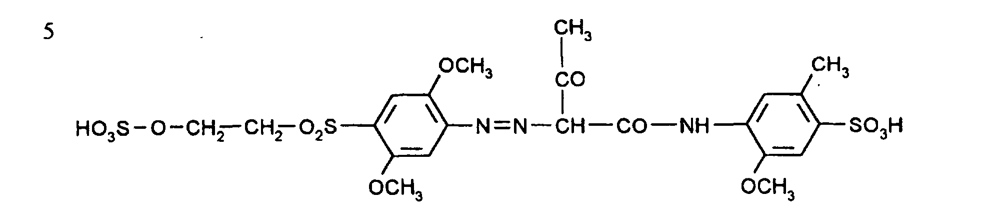

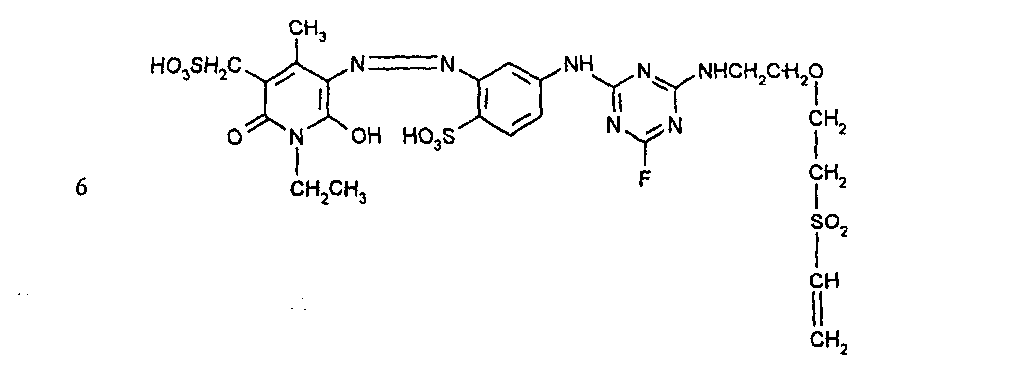

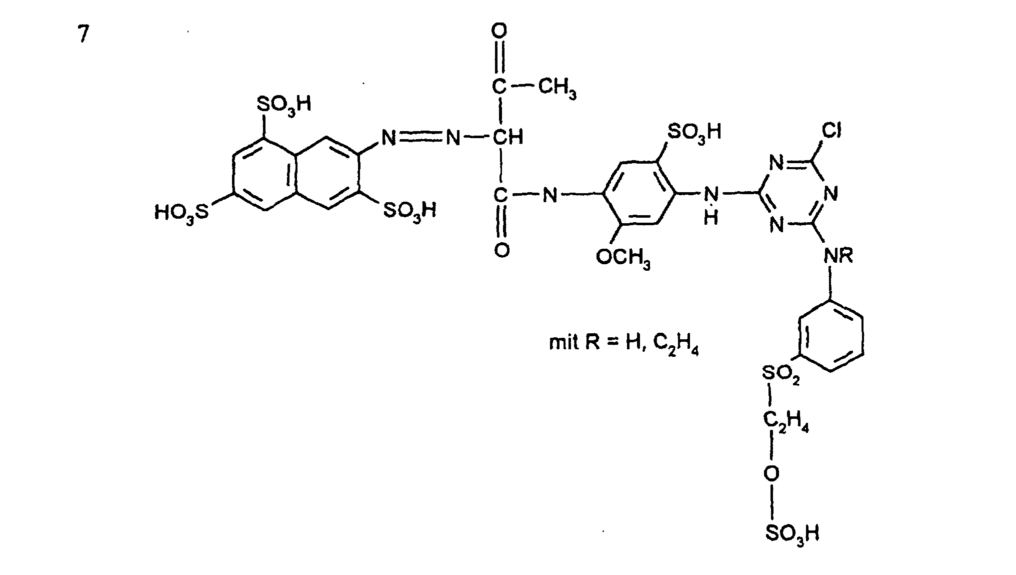

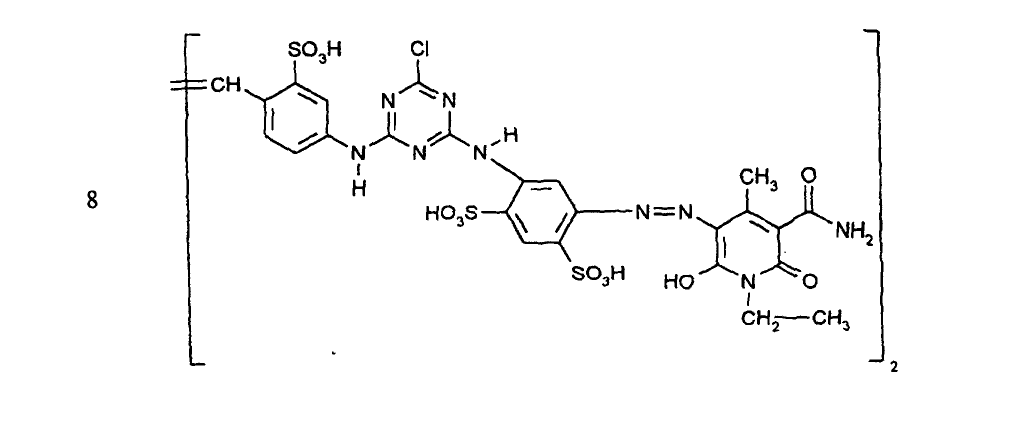

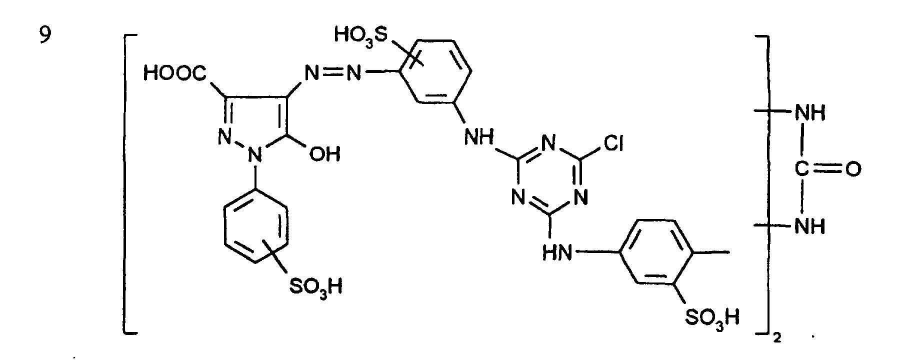

Überraschenderweise wurde außerdem gefunden, daß sich die Egalität des Warenbildes von Phthalocyaninreaktiv-Klotzfärbungen auf Cellulosefasern durch Mischungen unterschiedlicher Phthalocyaninreaktivfarbstoffe verbessern läßt, insbesondere durch Mischungen von Phthalocyaninreaktivfarbstoffen, welche unterschiedliche Reaktivgruppen aufweisen. Weiterhin wurde gefunden, daß sich auch die Egalität von brillanten Grünfärbungen auf Basis von Phthalocyanin und brillanten Azo-Gelbreaktivfarbstoffen verbessern läßt, wenn man als Gelbanteil Mischungen von zwei Reaktivgelbfarbstoffen verwendet, die ebenfalls unterschiedliche Reaktivgruppen aufweisen.

Das erfindungsgemäße Verfahren eignet sich in vorteilhafter Weise zur Erstellung von brillanten Grüntönen durch kombinierte Anwendung einer Mischung der Farbstoffe 1 und 2 bzw. 2 und 3 mit einer Mischung der Farbstoffe 4, 5 oder 6 unabhängig voneinander mit den Farbstoffen 7, 8 oder 9.

Es wurde auch gefunden, daß bei der Foulardapplikation eine wesentliche Verbesserung des Klotz- und Fixierverhaltens erreicht werden kann, so daß ein tongleiches Abquetschen der Klotzflotte im Foulard und ein nuancenkonstantes Fixieren im Dämpfer (pad steam) und beim Klotz-Kaltverweil-Prozeß (cold pad batch) möglich ist.

Besonders bevorzugte Reaktivtürkisblau-Mischungen sind:
- Mischung 1:: Farbstoffe 1.1 (mit x = etwa 1,5 bis 2 und y = etwa 1,3 bis 1,8) und 2.1
- Mischung 2:: Farbstoffe 1.2 und 2.1
- Mischung 3:: Farbstoffe 1.3 und 2.1
- Mischung 4:: Farbstoffe 1.1 (mit x = etwa 1,5 bis 2 und y = etwa 1,3 bis 1,8) und 2.2

Besonders bevorzugte zusätzliche Reaktivgelbmischungen sind:
- Mischung 7:: Farbstoffe 4 und 7
- Mischung 8:: Farbstoffe 4 und 8
- Mischung 9:: Farbstoffe 4 und 9
- Mischung 10:: Farbstoffe 5 und 7
- Mischung 11:: Farbstoffe 5 und 8
- Mischung 12:: Farbstoffe 5 und 9
- Mischung 13:: Farbstoffe 6 und 7
- Mischung 14:: Farbstoffe 6 und 8
- Mischung 15:: Farbstoffe 6 und 9

Die Mischungen enthalten bezogen auf den gesamten Farbstoffgehalt:
- Farbstoffe 1:: 0 bis 70, insbesondere 40 bis 55 Gew.-%
- Farbstoffe 2:: 30 bis 70, insbesondere 45 bis 60 Gew.-%
- Farbstoffe 3:: 0 bis 70, insbesondere 0 bis 45 Gew.-%
- Farbstoffe 4:: 30 bis 70, insbesondere 50 Gew.-%
- Farbstoffe 5:: 30 bis 70, insbesondere 50 Gew.-%
- Farbstoffe 6:: 30 bis 70, insbesondere 50 Gew.-%
- Farbstoffe 7:: 30 bis 70, insbesondere 50 Gew.-%
- Farbstoffe 8:: 30 bis 70, insbesondere 50 Gew.-%
- Farbstoffe 9:: 30 bis 70, insbesondere 50 Gew.-%

Zusätzlich können weitere Farbstoffe oder übliche Hilfsmittel eingesetzt werden. Insbesondere enthalten die erfindungsgemäßen Farbstoffmischungen pro 100 Teile Farbstoff bis 50 Teile eines anorganischen Salzes wie beispielsweise Kochsalz oder Natriumsulfat. Die erfindungsgemäßen Mischungen enthalten weiterhin vorzugsweise einen Puffer, insbesondere einen anorganischen Puffer, der einen Pufferungsbereich zwischen pH von 6,5 bis 7,5 ergibt. Zur besseren Handhabung enthalten die erfindungsgemäßen Mischungen vorzugsweise Dispergiermittel, insbesondere 0,5 bis 10 Gew.-Teile eines organischen, anionischen Dispergiermittels, bezogen auf die gesamte Mischung und ein Entstaubungsmittel, vorzugsweise 0,5 bis 5 Gew.-Teile bezogen auf die gesamte Mischung.

Die Farbstoffmischung kann vorzugsweise zum Färben von Baumwolle und anderen Cellulosefasern im Kaltverweil-Verfahren verwendet werden. Geeignete Materialien sind sowohl reine Cellulosefasermaterialien als auch deren Mischungen mit Polyester wie Polyester/Baumwolle, Polyester/Viskose, Polyester/Leinen sowie Mischungen verschiedener Cellulosefasern wie Baumwolle/Zellwolle bzw. Baumwolle/Leinen. Das Haupteinsatzgebiet der Mischung ist das Färben von Baumwollweb- und Wirkware sowie Frottierware.

Verweiltemperaturen von 20°C bis 30°C sind möglich, die bevorzugte Verweiltemperatur ist 25°C, die bevorzugte Verweiltemperatur ist identisch mit der bevorzugten Klotztemperatur. Als technischer Fortschritt ist die bezogen auf die Farbtiefe für Türkis- und Grünfärbungen kurze Verweilzeit hervorzuheben.

In einer anderen bevorzugten Ausführungsform wird die Mischung im Klotz-Dämpf-Verfahren (pad steam) verwendet.

Die erfindungsgemäßen Mischungen eignen sich insbesondere für das Färben nach Klotzverfahren vorzugsweie nach folgenden Richtrezepturen:

### A) Kaltverweil-Verfahren

### Richtrezeptur:

1. 1000 Teile Klotzflotte enthalten

| | |
|---|---|
| 1 bis 80 Teile | erfindungsgemäße Farbstoffmischung |
| 50 bis 100 Teile | Wasserglas spez. Gew. 1,5 |
| 7,5 bis 15 Teile | Natronlauge spez. Gew. 1,5 |
| 0 bis 100 Teile | Harnstoff |
| 0 bis 2 Teile | Netzmittel |
| 0 bis 20 Teile | Verdickungsmittel |

2. 1000 Teile Klotzflotte enthalten

| | |
|---|---|
| 1 bis 80 Teile | Farbstoff |
| 8 bis 20 Teile | Soda |
| 1 bis 12 Teile | Natronlauge spez. Gew. 1,5 |
| 0 bis 100 Teile | Harnstoff |
| 0 bis 2 Teile | Netzmittel |
| 0 bis 2 Teile | Verdickungsmittel |
| Flottenaufnahme | 50 bis 120 % |
| Klotzflottentemperatur | 20 bis 30°C |
| Verweilzeit | 24 bis 48 Stunden |

### B) Einbad-Klotz-Dämpf-Verfahren mit Zwischentrocknen

### Richtrezeptur:

1000 Teile Klotzflotte enthalten

| | |
|---|---|
| 1 bis 80 Teile | erfindungsgemäße Farbstoffmischung |
| 1 bis 4 Teile | Netzmittel |
| 5 bis 20 Teile | Verdickungsmittel |
| 5 bis 20 Teile | Soda wasserfrei |
| 0 bis 100 Teile | Harnstoff |
| 3 bis 5 Teile | m-Nitrobenzolsulfonat |

### Verfahrensbedingungen:

| | |
|---|---|
| Klotzflottentemperatur | 20 bis 30°C |
| Flottenaufnahme | 50 bis 70 % |
| Trocknungszeit | 1 bis 2 Stunden |
| Trocknungstemperatur | 120 bis 140°C |
| Dämpftemperatur | 102 bis 108°C |
| Dämpfzeit | 1 bis 8 Minuten |

### C) Einbad-Klotz-Dämpf-Verfahren ohne Zwischentrocknen

### Richtrezeptur:

1000 Teile Klotzflotte enthalten

| | |
|---|---|
| 1 bis 80 Teile | erfindungsgemäße Farbstoffmischung |
| 1 bis 4 Teile | Netzmittel |
| 10 bis 20 Teile | Soda wasserfrei oder |
| 10 bis 20 Teile | Natriumbicarbonat/Soda 50/50 |
| 3 bis 5 Teile | m-Nitrobenzolsulfonat |

### Verfahrensbedingungen:

| | |
|---|---|
| Klotzflottentemperatur | 20 bis 30°C |
| Flottenaufnahme | 50 bis 70 % |
| Dämpftemperatur | 102 bis 108°C |
| Dämpfzeit | 1 bis 8 Minuten |

### D) Zweibad-Klotz-Dämpf-Verfahren mit Zwischentrocknen

### Richtrezeptur:

1000 Teile Klotzflotte enthalten

| | |
|---|---|
| 1 bis 80 Teile | erfindungsgemäße Farbstoffmischung |
| 1 bis 4 Teile | Netzmittel |
| 5 bis 20 Teile | Verdickungsmittel |

### Chemikalienklotzflotte:

1000 Teile Chemikalienklotzflotte enthalten

| | |
|---|---|
| 250 Teile | Kochsalz |
| 20 bis 40 Teile | Soda wasserfrei und/oder |
| 20 Teile | Natronlauge des spez. Gew. 1,5 |

### Verfahrensbedingungen:

| | |
|---|---|
| Klotzflottentemperatur | 20 bis 30°C |
| Flottenaufnahme | 50 bis 70 % |
| Trocknungszeit | 1 bis 2 Minuten |
| Trocknungstemperatur | 120 bis 140°C |
| Flottenaufnahme im Chemikalienklotz | 50 bis 70 % |
| Dämpfzeit | 1 bis 8 Minuten |
| Dämpftemperatur | 102 bis 108°C |

### E) Zweibad-Klotz-Dämpf-Verfahren ohne Zwischentrocknen

### Richtrezeptur:

1000 Teile Klotzflotte enthalten

| | |
|---|---|
| 1 bis 80 Teile | erfindungsgemäße Farbstoffmischung |
| 1 bis 40 Teile | Netzmittel |

### Chemikalienklotzflotte:

1000 Teile Chemikalienklotzflotte enthalten

| | |
|---|---|
| 250 Teile | Kochsalz |
| 20 bis 40 Teile | Soda wasserfrei und/oder |
| 20 Teile | Natronlauge des spez. Gew. 1,5 |

### Verfahrensbedingungen:

| | |
|---|---|
| Klotzflottentemperatur | 20 bis 30°C |
| Flottenaufnahme | 50 bis 70 % |
| Flottenaufnahme im Chemikalienklotz | 20 bis 50 % |
| Dämpfzeit | 1 bis 8 Minuten |
| Dämpftemperatur | 102 bis 108°C |

### F) Klotz-Kondensier-Verfahren

### Richtrezeptur:

1000 Teile Klotzflotte enthalten

| | |
|---|---|
| 1 bis 40 Teile | erfindungsgemäße Farbstoffmischung |
| 1 bis 4 Teile | Netzmittel |
| 5 bis 10 Teile | Soda und/oder |
| 5 bis 10 Teile | Natriumbicarbonat |
| 5 bis 20 Teile | Verdickungsmittel |
| 3 bis 5 Teile | m-Nitrobenzolsulfonat |

### Verfahrensbedingungen:

| | |
|---|---|
| Klotzflottentemperatur | 20 bis 30°C |
| Flottenaufnahme | 50 bis 70 % |
| Trocknungszeit | 1 Minute |
| Trocknungstemperatur | 120 bis 140°C |
| Kondensiertemperatur | 140 bis 160°C |
| Kondensierzeit | 1 Minute |

Die erfindungsgemäßen Mischungen eignen sich weiterhin insbesondere für das Färben im Ausziehverfahren vorzugsweise nach einem der folgenden Schemata:

### A) Farbstoff-Start auf Haspelkufen

| Zeit (min) | Temperatur (°C) | Maßnahme |
|---|---|---|
| 0 | 60 | Farbstoffzusatz |
| 15 | 60 | Salz-Zusatz |
| 45 | 60 | Soda-Zusatz |
| 75 | 60 | Beginn des Aufheizens |
| 105 | 80 | Färben |
| 135 | 80 | Ende der Färbung |
| 145 | 80 | Ablassen der Färbeflotte |
| 165 | 60 | 1. Spülbad |
| 185 | 60 | 2. Spülbad |
| 215 | 80 | 3. Spülbad |
| 245 | 80 | 4. Spülbad |
| 290 | 95 | Kochbad |
| 300 | 20 | kalt spülen, ablassen |

### B) Salzstart (salt at start) auf Jetfärbeapparaten mit Ansatzgefäß (Das Salz wird dem Färbebad vor dem Farbstoff zugesetzt)

| Zeit (min) | Temperatur (°C) | Maßnahme |
|---|---|---|
| 0 | 30 | Salzzusatz bzw. Salzsole einziehen |
| 15 | 60 | Farbstofflösung einziehen |
| 45 | 60 | Alkalilösung einziehen |
| 75 | 60 | Beginn des Aufheizens |
| 105 | 80 | Färben |
| 135 | 80 | Ende der Färbung |
| 145 | 80 | Ablassen der Färbeflotte |
| 165 | 60 | 1. Spülbad |
| 185 | 60 | 2. Spülbad |
| 215 | 80 | 3. Spülbad |
| 245 | 80 | 4. Spülbad |
| 290 | 95 | Kochbad |
| 300 | 20 | kalt spülen, ablassen |

Die Farbstoffmischung kann vorzugsweise zum Färben von Baumwolle und anderen Cellulosefasern im Ausziehverfahren auf üblichen Färbeaggregaten verwendet werden.

Färbetemperaturen von 60°C bis 95°C sind möglich, die bevorzugte Färbetemperatur ist 80°C, die bevorzugte Starttemperatur 60°C.

### Klotzverfahren

### Beispiel 1

100 Teile einer entschlichteten und gebleichten Baumwollwebware werden mit einer Flottenaufnahme von 65 % mit einer wäßrigen Farbflotte imprägniert, welche in 1000 Teilen

| | |
|---|---|
| 2 Teile | eines handelsüblichen Netzmittels |
| 15 Teile | des Farbstoffs 1.1 (mit x = etwa 1,5 - 2 und y = etwa 1,3 - 1,8) |
| 15 Teile | des Farbstoffs 2.1 |
| 50 Teile | Wasserglas vom spez. Gew. 1,5 sowie |
| 7,5 Teile | Natronlauge vom spez. Gew. 1,5 |

gelöst enthält.

Die Temperatur der Flotte beträgt 25°C. Die mit Farbflotte imprägnierte Gewebebahn wird aufgedockt, in Polyethylenfolie eingepackt und bei langsamer Rotation 24 Stunden verweilt. Anschließend wird auf einer achtkästigen Kontinuebreitwaschmaschine nach folgendem Schema ausgewaschen. Zwei mal kalt spülen, zwei mal warm spülen, zwei mal kochend extrahieren, warm spülen, kalt spülen.

Man erhält eine egale klare Türkisblaufärbung mit guten Echtheitseigenschaften.

### Beispiel 2

1000 Teile einer entschlichteten und gebleichten Baumwollwebware werden mit einer Flottenaufnahme von 65 % mit einer wäßrigen Farbflotte imprägniert, welche in 1000 Teilen

| | |
|---|---|
| 2 Teile | eines handelsüblichen Netzmittels |
| 38,5 Teile | des Farbstoffs 1.1 (mit x = etwa 1,5 - 2 und y = etwa 1,3 - 1,8) |
| 38,5 Teile | des Farbstoffs 2.1 |
| 11,5 Teile | des Farbstoffs 4 |
| 11,5 Teile | des Farbstoffs 8 |
| 100 Teile | Harnstoff |
| 150 Teile | Wasserglas vom spez. Gew. 1,5 sowie |
| 154 Teile | Natronlauge vom spez. Gew. 1,5 |

gelöst enthält.

Die Temperatur der Flotte beträgt 25°C. Die mit Farbflotte imprägnierte Gewebebahn wird aufgedockt, in Polyethylenfolie eingepackt und bei langsamer Rotation 48 Stunden verweilt. Anschließend wird auf einer achtkästigen Kontinuebreitwaschmaschine nach folgendem Schema ausgewaschen: Zwei mal kalt spülen, zwei mal warm spülen, zwei mal kochend extrahieren, warm spülen, kalt spülen.

Man erhält eine flächenegale, endengleiche tiefe Grünfärbung mit guten Echtheitseigenschaften.

### Beispiel 3

1000 Teile einer abgekochten und gebleichten Baumwollwebware werden mit einer Flottenaufnahme von 65 % mit einer wäßrigen Farbflotte imprägniert, welche in 1000 Teilen

| | |
|---|---|
| 12,5 Teile | des Farbstoffs 1.3 |
| 12,5 Teile | des Farbstoffs 2.2 |
| 7,5 Teile | des Farbstoffs 5 |
| 7,5 Teile | des Farbstoffs 9 |
| 12 Teile | Soda wasserfrei sowie |
| 8 Teile | Natronlauge vom spez. Gew. 1,356 |

gelöst enthält.

Die Temperatur der Klotzflotte beträgt 25°C. Die mit Farbflotte imprägnierte Gewebebahn wird aufgedockt, in Polyethylenfolie eingepackt und bei langsamer Rotation 48 Stunden verweilt. Anschließend wird auf einer achtkästigen Kontinuebreitwaschmaschine nach folgendem Schema ausgewaschen: Zwei mal kalt spülen, zwei mal warm spülen, zwei mal kochend extrahieren, warm spülen, kalt spülen.

Man erhält eine flächenegale, endengleiche tiefe Grünfärbung mit guten Echtheitseigenschaften.

### Beispiel 4

1000 Teile einer entschlichteten und gebleichten Baumwollwebware werden mit einer Flottenaufnahme von 75 % mit einer wäßrigen Farbflotte imprägniert, welche in 1000 Teilen

| | |
|---|---|
| 2 Teile | eines handelsüblichen Netzmittels |
| 12 Teile | des Farbstoffs 1.2 |
| 12 Teile | des Farbstoffs 2.1 |
| 4 Teile | des Farbstoffs 4 |
| 4 Teile | des Farbstoffs 8 |
| 10 Teile | eines handelsüblichen Polyacrylat-Verdickungsmittels sowie |
| 3 Teile | m-Nitrobenzolsulfonat |

gelöst enthält.

Die Temperatur der Flotte beträgt 30°C. Die Warenbahn durchläuft anschließend einen Chemikalienklotz. Das wäßrige Chemikalienklotzbad enthält in 1000 Teilen 250 Teile Natriumchlorid und 20 Teile Natronlauge vom spezifischen Gewicht 1,5.

Nach dem Chemikalienklotzbad wird die Warenbahn in einen Schnelldämpfer übergeführt und 60 Sekunden bei 106°C gedämpft. Danach wird auf einer achtkästigen Waschmaschine nach dem genannten Schema ausgewaschen:
zweimal kalt spülen, zweimal warm spülen, zweimal kochend extrahieren, warm spülen, kalt spülen.

Man erhält eine egale Grünfärbung mit guten Echtheitseigenschaften.

### Ausziehverfahren

### Beispiel 5

1000 Teile einer wässrigen Färbeflotte werden auf einer Haspelkufe bei 60°C mit 100 Teilen einer gebleichten Baumwollwirkware und 3 Teilen einer Phthalocyaninreaktivfarbstoffmischung versetzt. Die Mischung besteht aus je 1,5 Teilen des Farbstoffs 1.1 (mit x = etwa 1,5 - 2 und y = etwa 1,3 - 1,8) und 1,5 Teilen des Farbstoffs 2.1.

Nachdem sich in einer Zeit von 15 Minuten die Farbstoffmischung gleichmäßig in der Flotte und auf der Baumwolle verteilt hat, werden über einen Zeitraum von 30 Minuten 50 Teile Natriumchlorid in die Färbeflotte gegeben und anschließend 10 Teile Soda im Abstand von 10 Minuten zu je 3 Portionen von je 1 Teil, 2 Teilen und 7 Teilen hinzugefügt. Anschließend wird in 30 Minuten auf 80°C erwärmt und 30 Minuten bei dieser Temperatur behandelt. Danach wird die Flotte abgelassen, zweimal bei 60°C und zweimal bei 80°C gespült. Anschließend wird 15 Minuten kochend extrahiert und die Waschflotte abgelassen. Nach dem kalt Spülen erhält man eine egale Türkisfärbung mit guten Echtheitseigenschaften.

Das Warenbild der erhaltenen Färbung ist egaler als das Warenbild einer nach gleichem Färbeschema erhaltenen Färbung, in der jeweils 3 Teile ausschließlich der Farbstoff 1 bzw. Farbstoff 2 eingesetzt wurden.

### Beispiel 6

800 Teile einer wäßrigen Färbeflotte werden auf eine handelsüblichen Jetfärbeaggregat bei 30°C mit 100 Teilen Baumwollwirkware und 40 Teilen Natriumchlorid versetzt.

Nach 10 Minuten Behandeln bei dieser Temperatur wird in 15 Minuten auf 60°C erwärmt und über einen Zeitraum von 45 Minuten 100 Teile einer Farbstofflösung zugesetzt bestehend aus
1 Teil einer Mischung aus
0,7 Teilen des Farbstoffs 1.2
0,3 Teilen des Farbstoffs 2.1
sowie
2 Teilen des Farbstoffs der Formel 4.1

Anschließend wird über einen Zeitraum von 45 Minuten 10 Teile Soda wasserfrei gelöst in 100 Teilen Wasser zugegeben. Nach 15 Minuten wird in 20 Minuten auf 80°C erwärmt und 30 Minuten bei dieser Temperatur behandelt.

Danach wird die Flotte abgelassen, zweimal bei 60°C und zweimal bei 80°C gespült. Anschließend wird 15 Minuten kochend geseift und die Waschflotte abgelassen. Nach dem kalt Spülen erhält man eine egale Grünfärbung mit guten Echtheitseigenschaften.

Das Warenbild ist egaler als das Warenbild einer nach gleichem Färbeschema erhaltenen Färbung in der jeweils anstelle der Mischung aus Farbstoff 1 und 2 1 Teil des Farbstoffs 1 bzw. 1 Teil des Farbstoffs 2 eingesetzt wurden.

### Beispiel 7

100 Teile eines gebleichten Baumwollgarnes werden auf einem handelsüblichen Garnfärbeapparat bei einer Flottenumwälzung von 27 l/kg/Minute mit 750 Teilen einer 60°C warmen Färbeflotte behandelt, welche
40 Teile Natriumsulfat (wasserfrei)
10 Teile Soda (wasserfrei)
3 Teile einer Farbstoffmischung bestehend aus:
60 Teilen des Farbstoffs 1.3
40 Teilen des Farbstoffs 2.1 sowie
2 Teilen des Farbstoffs der Formel 8
enthält.

Das Bad wird in 20 Minuten auf 80°C erwärmt und 60 Minuten bei dieser Temperatur gehalten. Nach dieser Zeit wird die Flotte abgelassen und zweimal mit 750 Teilen einer 60°C warmen Flotte gespült. Danach wird mit 750 Teilen einer 60°C warmen frischen Flotte aufgefüllt und 0,5 Teile einer 60%igen Essigsäure zugesetzt und auf 80°C erwärmt. Nach 10 Minuten Behandeln bei dieser Temperatur wird die Flotte abgelassen und mit frischer Flotte von 60°C auf das gleiche Volumen aufgefüllt und auf 95°C gebracht. Nach 15 Minuten Behandeln bei dieser Temperatur wird abgelassen und kalt im Überlauf gespült.

Man erhält eine egale tiefe Grünfärbung.

### Beispiel 8

100 Teile einer gebleichten Baumwollwebware werden auf einem handelsüblichen Kurzflottenjetfärbeaggregat mit 500 Teilen einer 60°C warmen Färbeflotte behandelt, welche
30 Teile Natriumchlorid
10 Teile Soda (wasserfrei)
4 Teile der Farbstoffmischung bestehend aus
   50 Teilen des Farbstoffs 1.1 (mit x = etwa 1,5 - 2 und y = etwa 1,3 - 1,8)
   50 Teilen des Farbstoffs 2.1
0,5 Teile des Farbstoffs der Formel 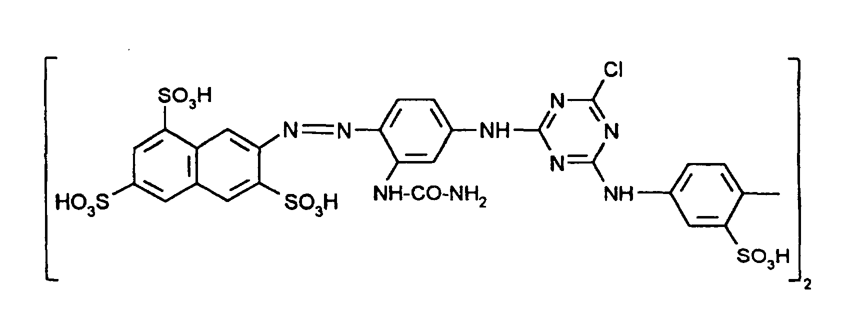 sowie
0,5 Teile des Farbstoffs der Formel 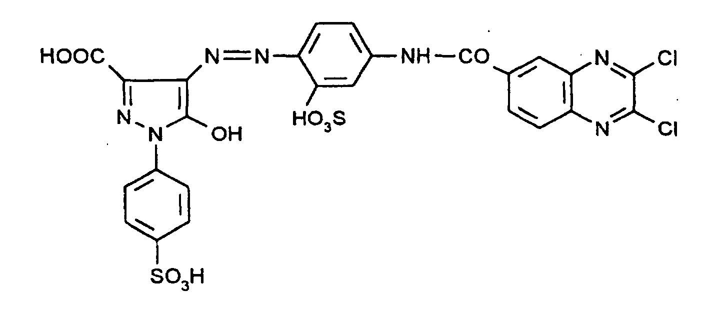
enthält.

Das Bad wird in 20 Minuten auf 80°C erwärmt und 60 Minuten bei dieser Temperatur gehalten. Nach dieser Zeit wird die Flotte abgelassen und zweimal je 10 Minuten mit 800 Teilen einer 60°C warmen Flotte und zweimal mit 800 Teilen einer 80°C warmen Flotte gespült.

Anschließend wird mit frischer Flotte auf 95°C erwärmt und 20 Minuten kochend extrahiert. Nach Ablassen der Waschflotte wird kalt gespült.

Man erhält eine egale Grünfärbung mit guten Echtheitseigenschaften.

### Beispiel 9

100 Teile einer gebleichten Baumwollmaschenware werden auf einem handelsüblichen Jetfärbeaggregat mit 800 Teilen einer 60°C warmen Färbeflotte behandelt, welche
40 Teile Natriumchlorid
10 Teile Soda (wasserfrei)
4 Teile der Farbstoffmischung bestehend aus
50 Teilen des Farbstoffs 1.1 (mit x = etwa 1,5 - 2 und y = etwa 1,3 - 1,8)
35 Teilen des Farbstoffs 2.1 und
15 Teilen des Farbstoffs 2.2
0,5 Teile des Farbstoffs der Formel 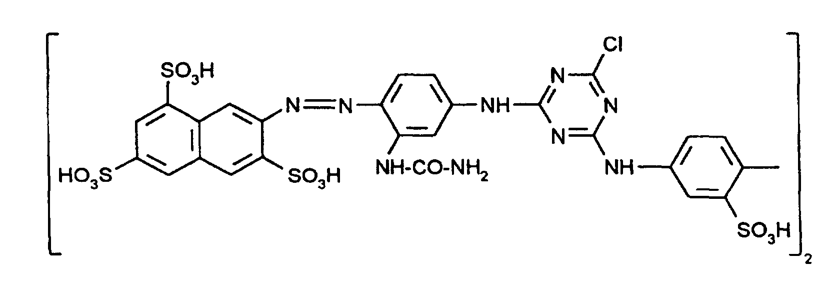 sowie
0,5 Teile des Farbstoffs der Formel 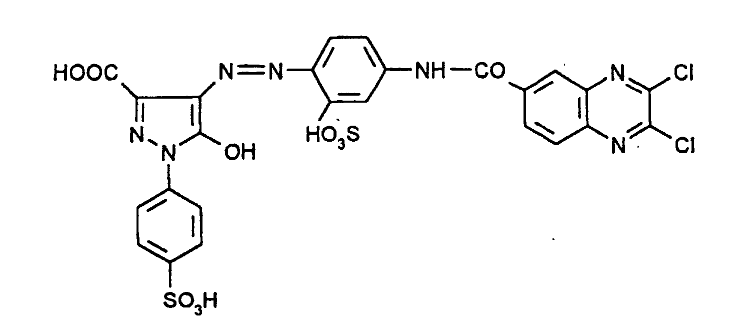
enthält.

Das Bad wird in 20 Minuten auf 80°C erwärmt und 60 Minuten bei dieser Temperatur gehalten. Nach dieser Zeit wird die Flotte abgelassen und zweimal je 10 Minuten mit 800 Teilen einer 60°C warmen Flotte und zweimal mit 800 Teilen einer 80°C warmen Flotte gespült.

Anschließend wird mit frischer Flotte auf 95°C erwärmt und 20 Minuten kochend extrahiert. Nach Ablassen der Waschflotte wird kalt gespült.

Man erhält eine egale Grünfärbung mit guten Echtheitseigenschaften.

## Patentansprüche

1. Farbstoffmischung enthaltend wenigstens zwei Phthalocyaninreaktivfarbstoffe, welche eine unterschiedliche Reaktivgruppe aufweisen, **dadurch gekennzeichnet, daß** wenigstens ein chlorfreier Phthalocyaninfluorpyrimidinylreaktivfarbstoff 2 und wenigstens ein Phthalocyaninvinylsulfonylreaktivfarbstoff 1 und/oder ein Phthalocyaninmonochlortriazinylreaktivfarbstoff 3 enthalten ist.

2. Farbstoffmischung gemäß Anspruch 1, **dadurch gekennzeichnet, daß** Farbstoff 2 der Formel (2a) entspricht 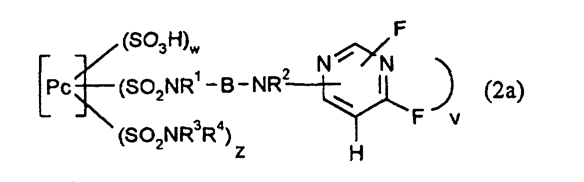 worin
Pc = Rest eines Kupfer- oder Nickelphthalocyanins,
B = gegebenenfalls substituierte Arylen-, Aralkylen- oder gegebenenfalls substituierte Alkylenbrücke,
R¹, R², R³, R⁴ = unabhängig voneinander Wasserstoff, gegebenenfalls substituierter Alkyl- oder Arylrest wobei
-NR¹-B-NR²- auch 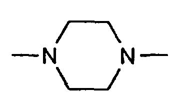 und
-NR³R⁴ auch 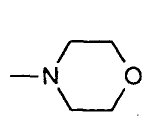 sein kann,
w, z = unabhängig voneinander eine Zahl von 0 bis 3
v = Zahl von 0,5 bis 2,0.

3. Farbstoffmischung gemäß wengistens einem der vorhergehenden Ansprüchen, **dadurch gekennzeichnet, daß** der Phthalocyaninvinylsulfonylreaktivfarbstoff 1 einer der Formeln 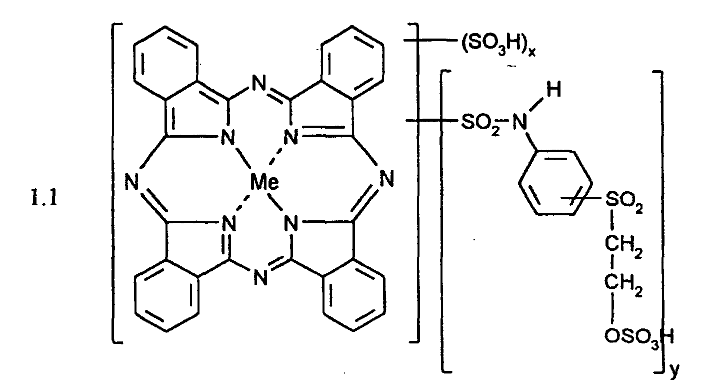 wobei
Me = Metallatom,
x = 1 bis 3 ,
y = 1 bis 3 und
x + y = etwa 3 bis 4 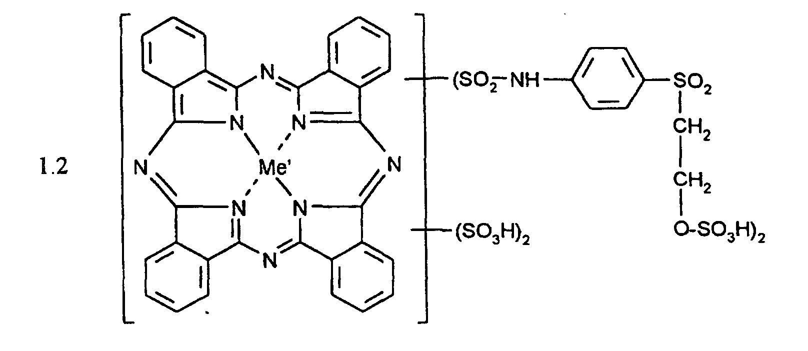 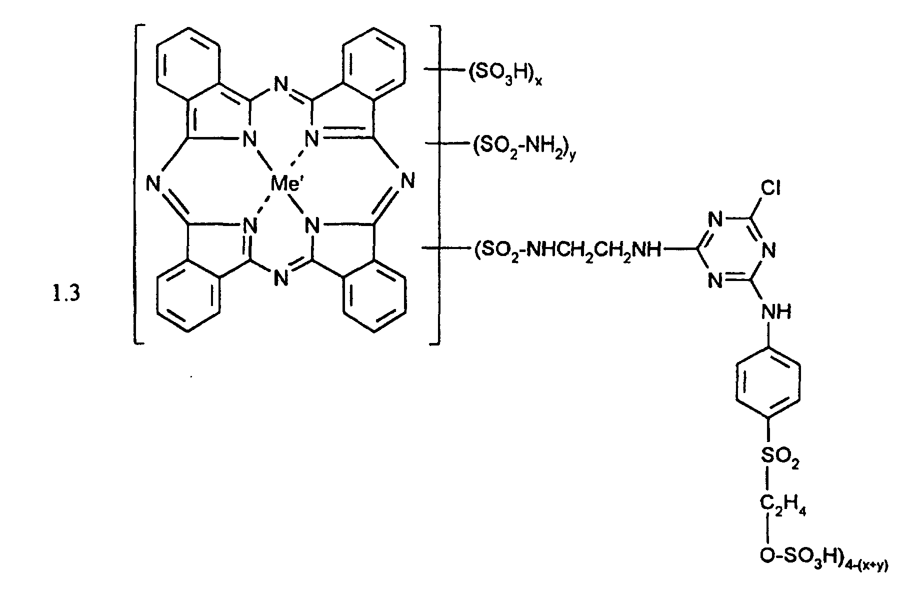
und der Phthalocyaninfluorpyrimidinreaktivfarbstoff 2 einer der Formeln 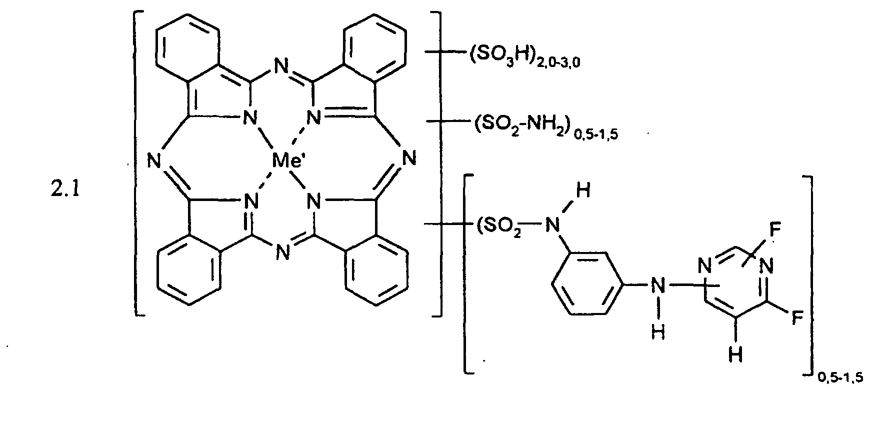 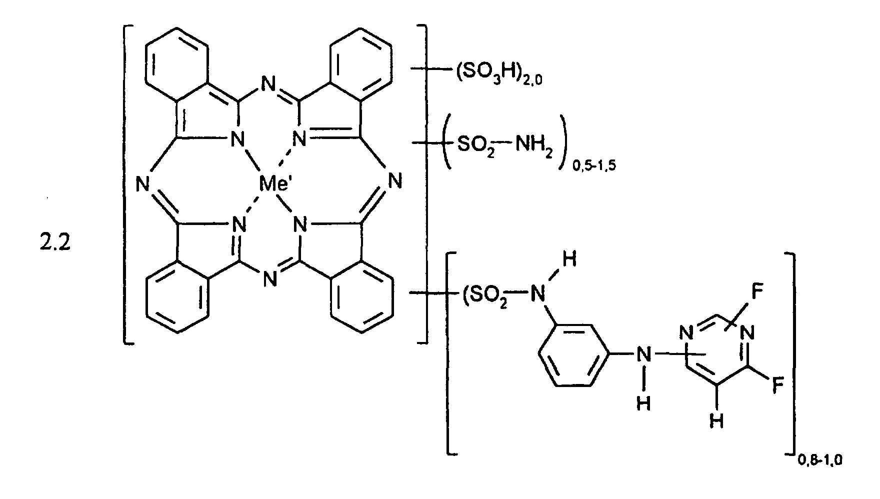 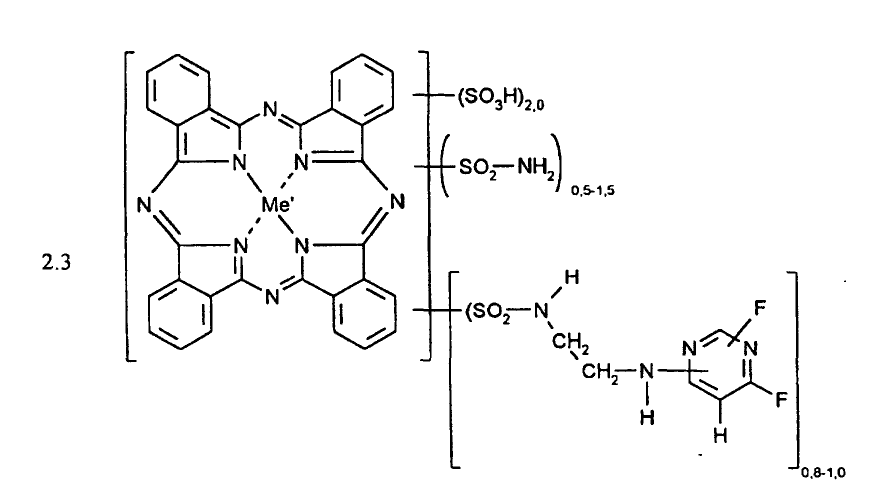 und der Phthalocyaninmonochlortriazinylreaktivfarbstoff 3 einer der Formeln 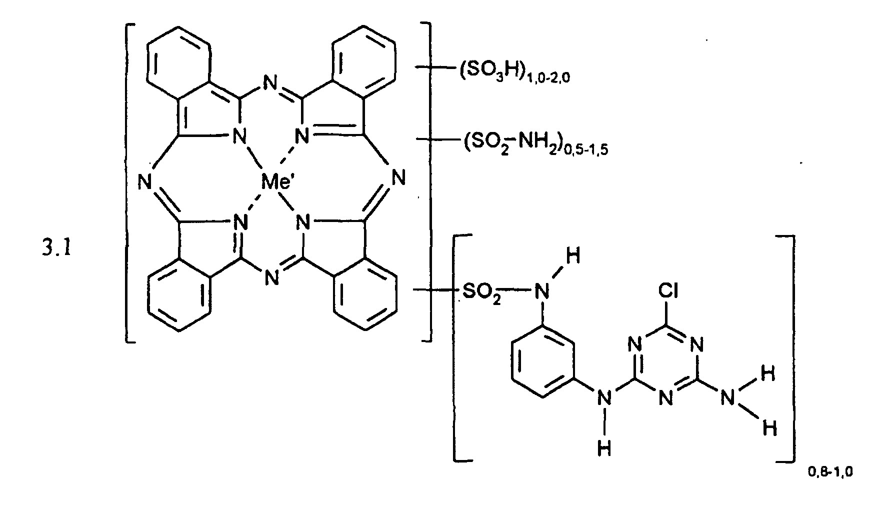 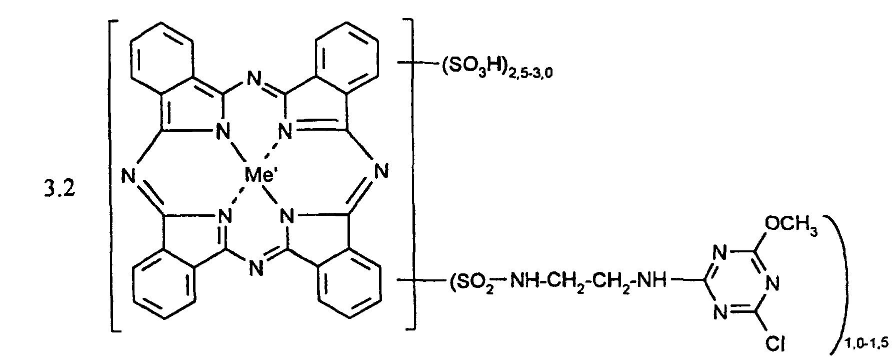 entspricht,
mit
x = 0,8 bis 1,5
y = 0,2 bis 0,5
Me' = Cu oder Ni unabhängig voneinander bei mehrfachem Auftreten,
wobei es sich bei der Angabe der Zahl der Substituenten jeweils um statistische Mittelwerte handelt.

4. Farbstoffmischung gemäß wenigstens einem der vorhergehenden Ansprüche, **dadurch gekennzeichnet, daß** die Mischung 30 bis 70 Gew.-% des Farbstoffs 1, 30 bis 70 Gew.-% des Farbstoffs 2 und 0 bis 70 Gew.-% des Farbstoffs 3 bezogen auf den gesamten Farbstoffgehalt enthält.

5. Farbstoffmischung gemäß wenigstens einem der vorhergehenden Ansprüche, **dadurch gekennzeichnet, daß** pro Teil Farbstoff bis 50 Teile eines anorganischen Salzes und ein Puffer, der einen Pufferungsbereich zwischen pH 6,5 bis 7,5 ergibt, enthalten ist.

6. Farbstoffmischung gemäß wenigstens einem der vorhergehenden Ansprüche, **dadurch gekennzeichnet, daß** die Mischung 0,5 bis 10 Gew.-Teile eines organischen, anionischen Dispergiermittels und 0,5 Gew.-Teile eines Entstaubungsmittels, jeweils bezogen auf die gesamte Mischung, enthält.

7. Verfahren zum Färben von Cellulosefasern, Cellulosemischfasern mit einer Mischung aus Reaktivfarbstoffen, **dadurch gekennzeichnet, daß** eine Mischung gemäß wenigstens einem der der vorhergehenden Ansprüche verwendet wird.

8. Verfahren nach Anspruch 6, **dadurch gekennzeichnet, daß** nach dem Klotz-Kaltverweil-Verfahren, dem Klotz-Dämpf-Verfahren oder dem Ausziehverfahren gefärbt wird.

9. Farbstoffmischung, gemäß Anspruch 1, **dadurch gekennzeichnet, daß** zusätzlich zur Phthalocyaninreaktivfarbstoffmischung eine Reaktivgelbfarbstoffmischung enthalten ist, die wenigstens einen oder mehrere der folgenden Farbstoffe 4 bis 6 enthält:

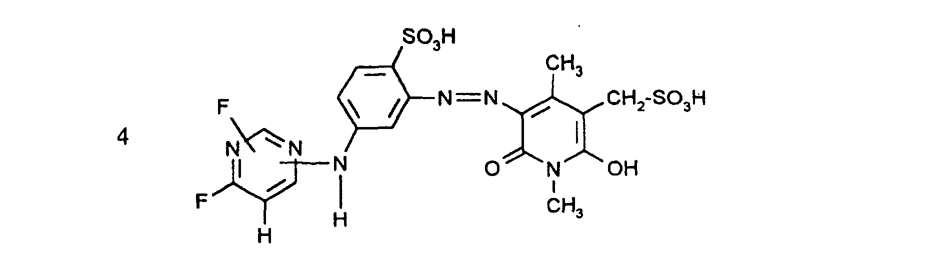

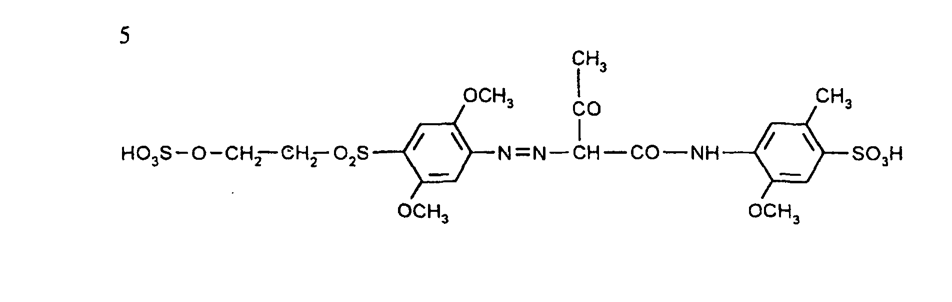

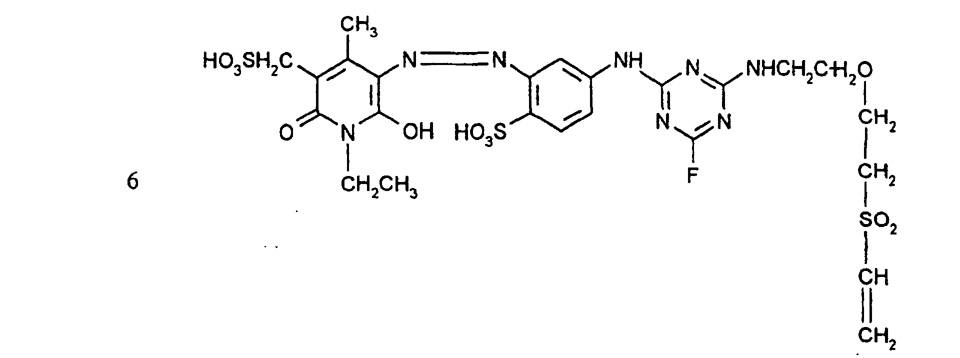

10. Farbstoffmischung gemäß Anspruch 1, **dadurch gekennzeichnet, daß** zusätzlich zur Phthalocyaninreaktivfarbstoffmischung eine Reaktivgelbfarbstoffmischung enthalten ist, die wenigstens einen der Farbstoffe 7 bis 9 enthält:

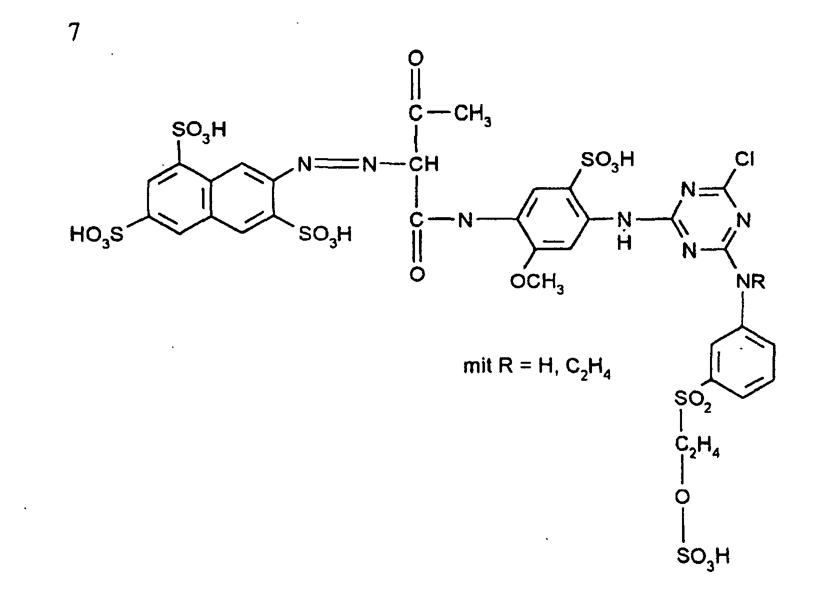

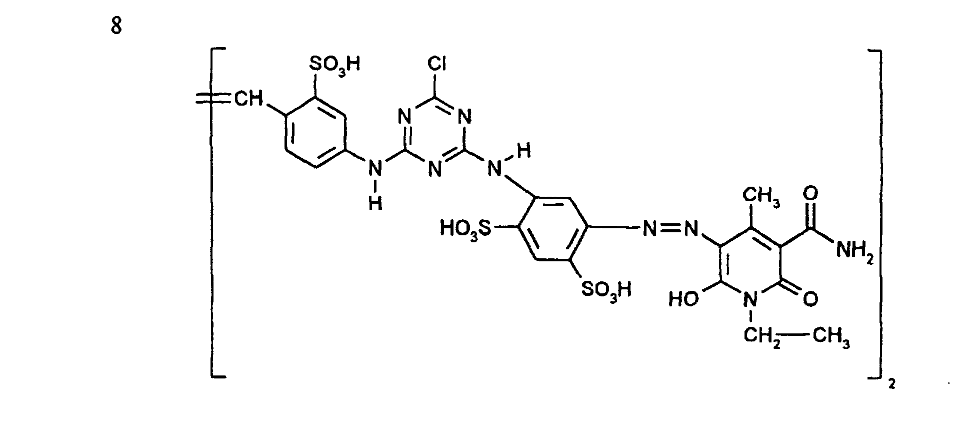

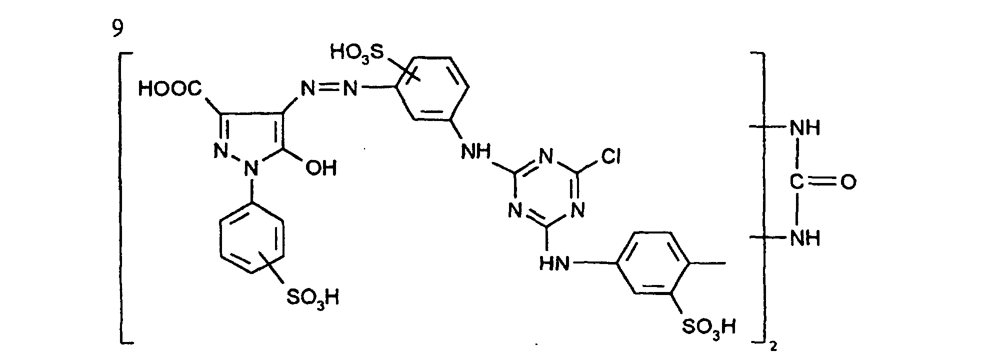

11. Textilien, die Fasern enthalten, die mit einer Reaktivfarbstoffmischung gemäß wenigstens einem der vorhergehenden Ansprüche gefärbt worden sind.

## Claims

1. A dye mixture comprising at least two phthalocyanine reactive dyestuffs which contain a different reactive group, which comprises at least one chlorine-free phthalocyanine-fluoropyrimidinyl reactive dyestuff 2 and at least one phthalocyanine-vinylsulfonyl reactive dyestuff 1 and/or one phthalocyanine-monochlorotriazinyl reactive dyestuff 3.

2. A dyestuff mixture as claimed in claim 1, wherein the dyestuff 2 corresponds to the formula (2a) 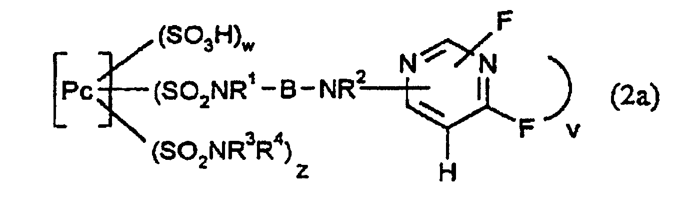 in which
Pc = the radical of a copper phthalocyanine or nickel phthalocyanine,
B = an optionally substituted arylene, aralkylene or optionally substituted alkylene bridge,
R¹, R², R³, R⁴ = independently of one another hydrogen or an optionally substituted alkyl or aryl radical,
and in which
-NR¹-B-NR²- can also be 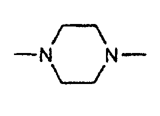 and -NR³R⁴ can also be 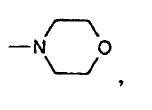
w, z = independently of one another a number from 0 to 3
v = a number from 0.5 to 2.0.

3. A dyestuff mixture as claimed in at least one of the preceding claims, wherein the phthalocyanine-vinylsulfonyl reactive dyestuff 1 corresponds to one of the formulae 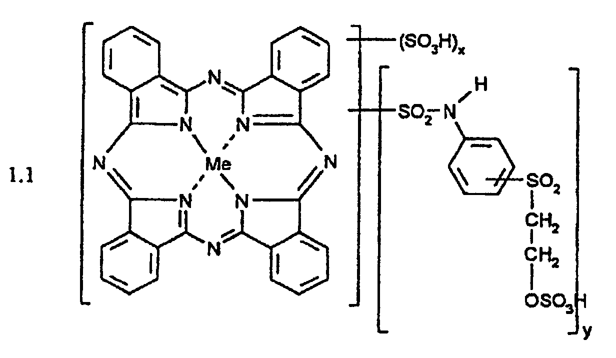 in which
Me = a metal atom,
x = 1 to 3,
y = 1 to 3 and
x + y = about 3 to 4 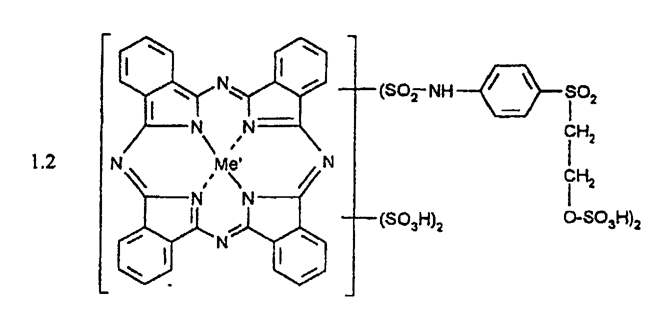 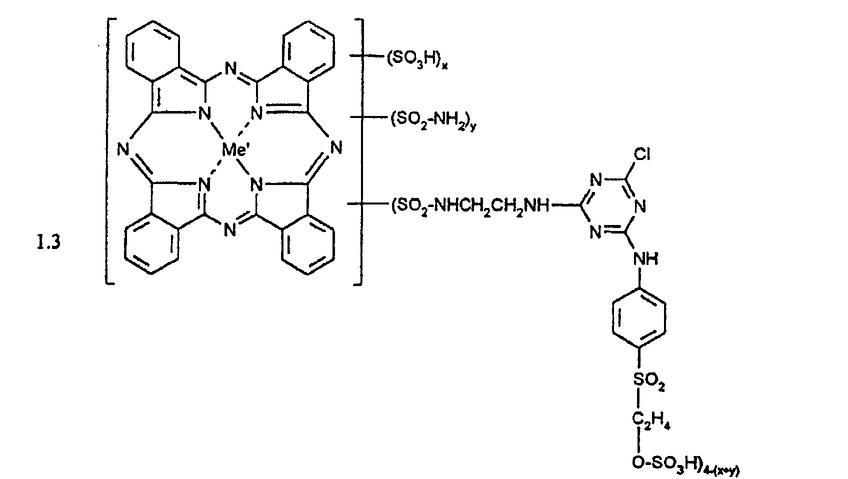
and the phthalocyanine-fluoropyrimidine reactive dyestuff 2 corresponds to one of the formulae 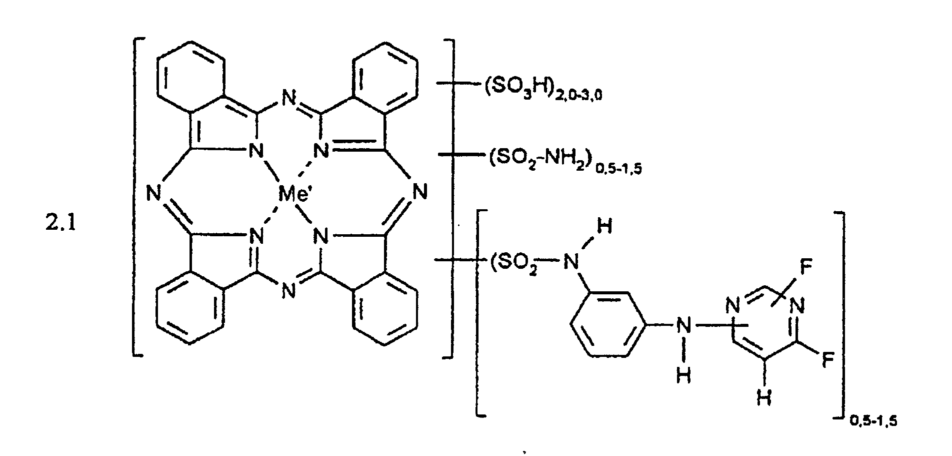 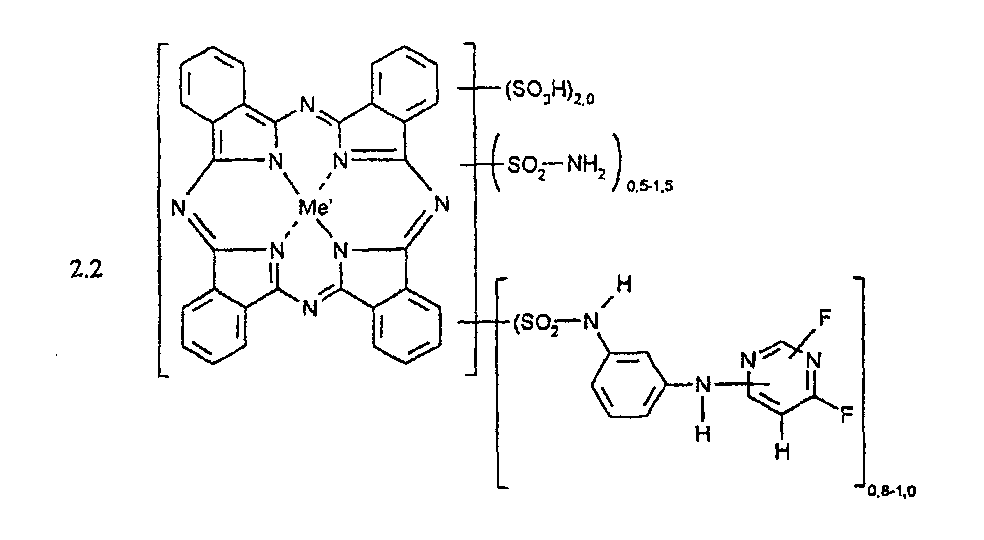 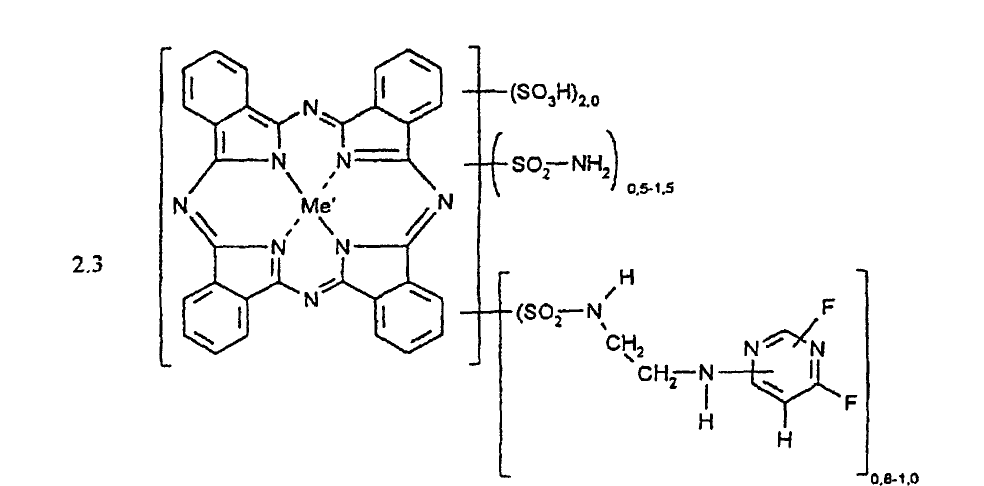 and the phthalocyanine-monochlorotriazinyl reactive dyestuff 3 corresponds to one of the formulae 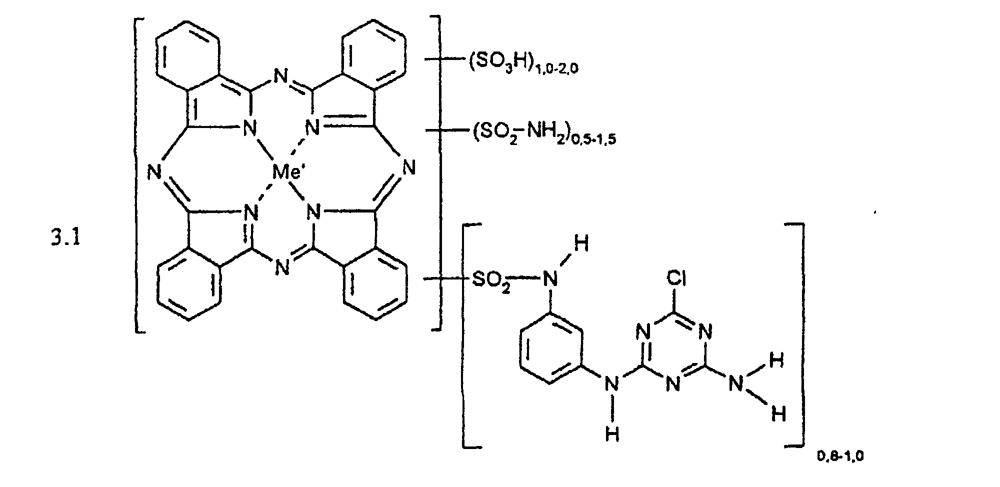 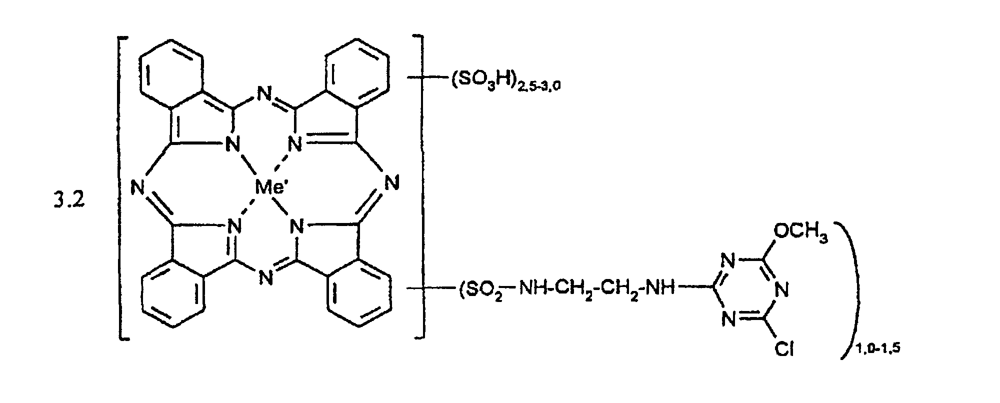 where
x = 0.8 to 1.5
y = 0.2 to 0.5
Me' = Cu or Ni, independently of one another if they occur two or more times,
and in which the numbers stated for the substituents are in each case statistical mean values.

4. A dyestuff mixture as claimed in at least one of the preceding claims, wherein the mixture comprises 30 to 70% by weight of the dyestuff 1, 30 to 70% by weight of the dyestuff 2 and 0 to 70% by weight of the dyestuff 3, based on the total dyestuff content.

5. A dyestuff mixture as claimed in at least one of the preceding claims, which comprises, per part of dyestuff, up to 50 parts of an inorganic salt and a buffer which produces a buffering range between pH 6.5 and 7.5.

6. A dyestuff mixture as claimed in at least one of the preceding claims, wherein the mixture comprises 0.5 to 10 parts by weight of an organic, anionic dispersing agent and 0.5 parts by weight of a dust removal agent, in each case based on the total mixture.

7. A process for dyeing cellulose fibers or cellulose mixed fibers with a mixture of reactive dyestuffs, which comprises using a mixture as claimed in at least one of the preceding claims.

8. The process as claimed in claim 6, wherein dyeing is carried out by the cold pad-batch process, the pad-steam process or the exhaustion process.

9. A dyestuff mixture as claimed in claim 1, which comprises, in addition to the phthalocyanine reactive dyestuff mixture, a reactive yellow dyestuff mixture which comprises at least one or more of the following dyestuffs 4 to 6:

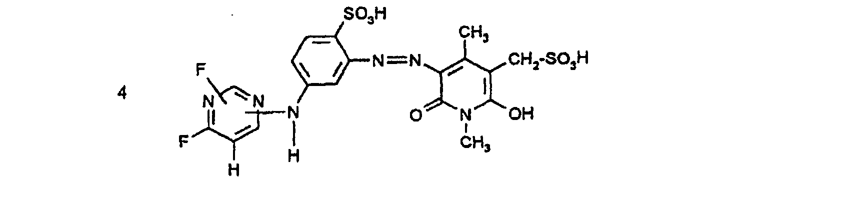

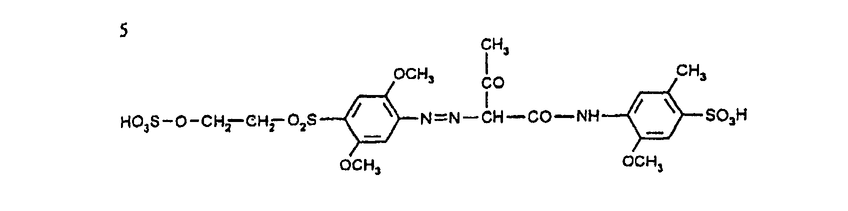

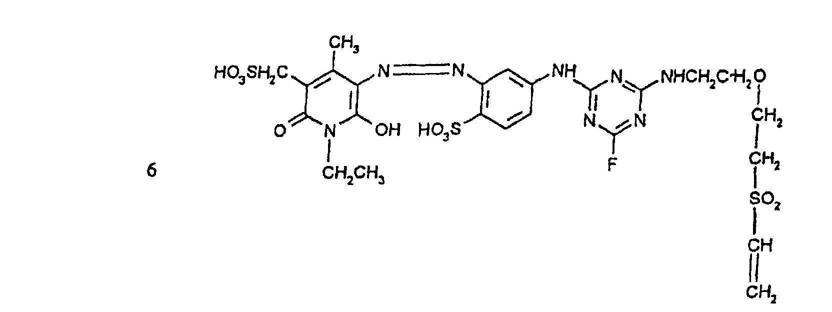

10. A dyestuff mixture as claimed in claim 1, which comprises, in addition to the phthalocyanine reactive dyestuff mixture, a reactive yellow dyestuff mixture which comprises at least one of the dyestuffs 7 to 9:

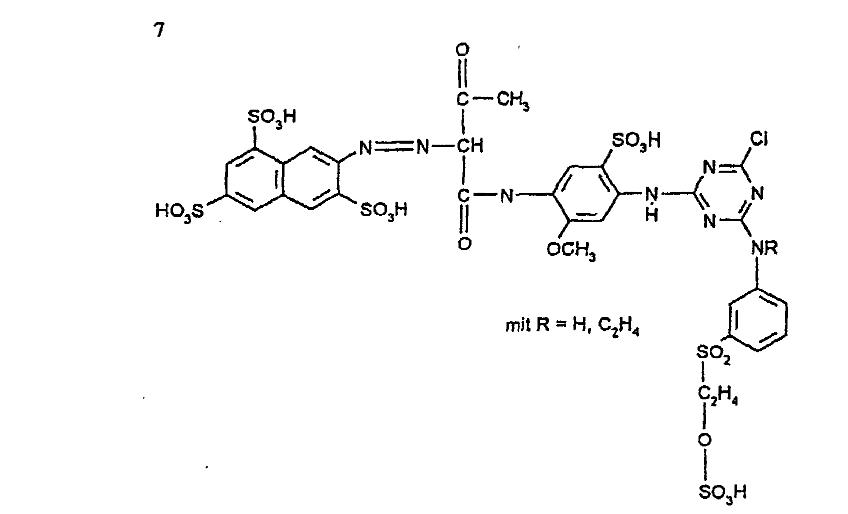

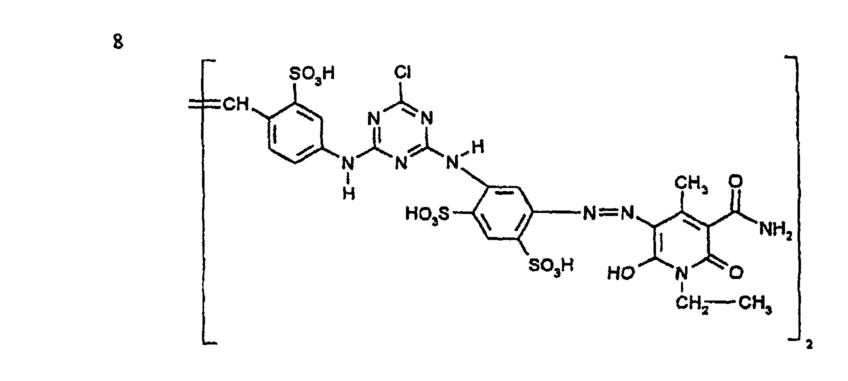

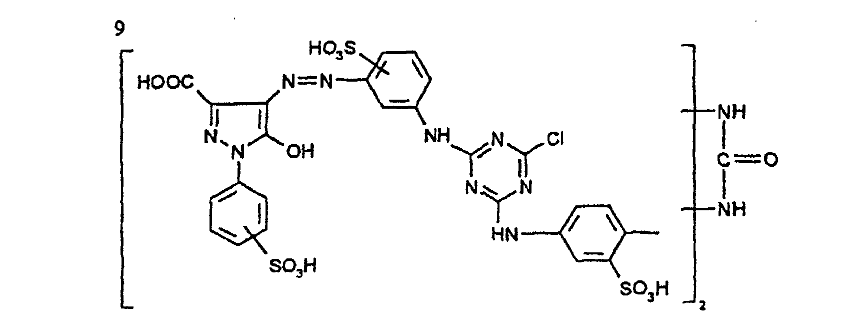

11. A textile which comprises fibers which have been dyed with a reactive dyestuff mixture as claimed in at least one of the preceding claims.

## Revendications

1. Mélange de colorants comprenant au moins deux colorants réactifs phtalocyanine renfermant un groupe réactif différent, **caractérisé en ce qu'**au moins un colorant réactif phtalocyaninefluoropyrimidinyle non chloré 2 et au moins un colorant réactif phtalocyanine-vinylsulfonyle 1 et/ou un colorant réactif phtalocyaninemonochlorotriazinyle 3 sont présents.

2. Mélange de colorants selon la revendication 1, **caractérisé en ce que** le colorant 2 correspond à la formule (2a) 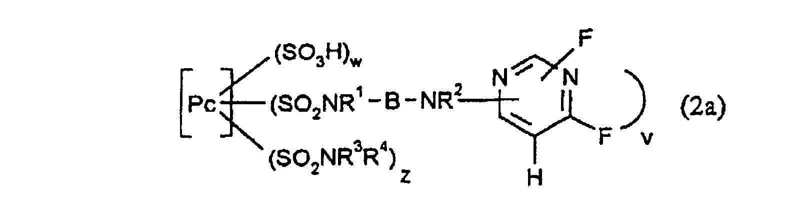 dans laquelle
Pc = le radical d'une phtalocyanine au cuivre ou au nickel,
B = un pont arylène éventuellement substitué, aralkylène ou alkylène éventuellement substitué,
R¹, R², R³, R⁴ = indépendamment les uns des autres, un hydrogène, un radical alkyle ou aryle éventuellement substitué, où
-NR¹-B-NR²- peut également représenter 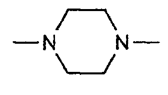 et
-NR³R⁴ peut également représenter 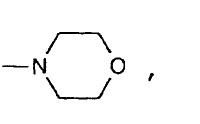
w, z = indépendamment l'un de l'autre, un nombre de 0 à 3
v = un nombre de 0,5 à 2,0.

3. Mélange de colorants selon au moins l'une des revendications précédentes, **caractérisé en ce que** le colorant réactif phtalocyanine-vinylsulfonyle 1 correspond à l'une des formules 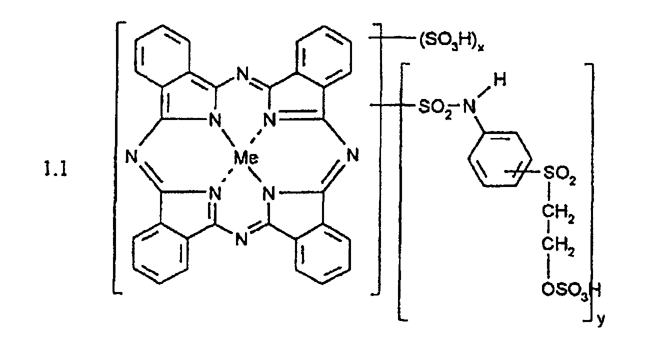 dans lesquelles
Me = un atome métallique,
x = de 1 à 3,
y = de 1 à 3 et
x + y = d'environ 3 à 4 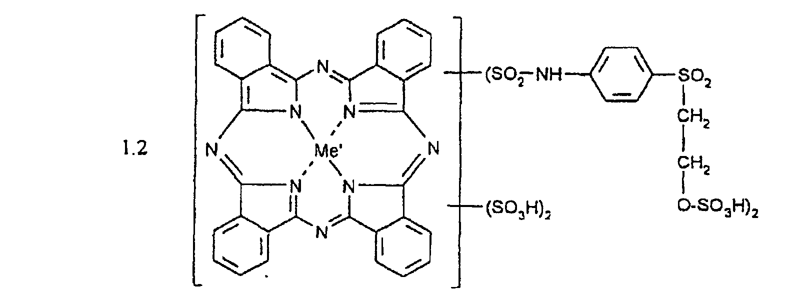 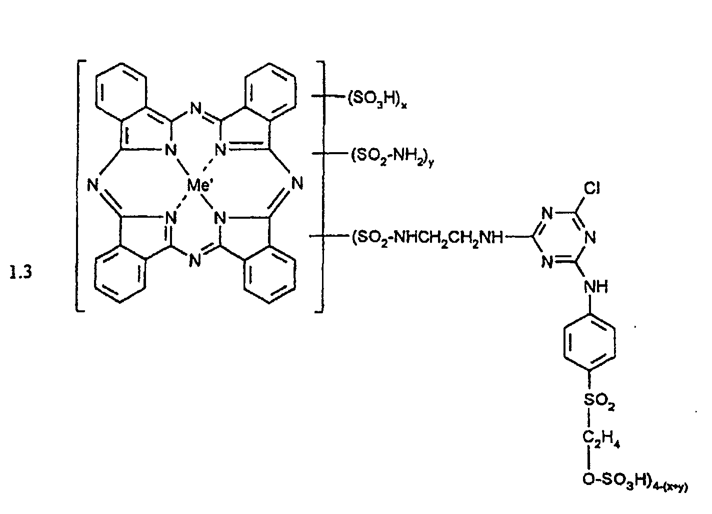 et le colorant réactif phtalocyaninefluoropyrimidine 2 correspond à l'une des formules 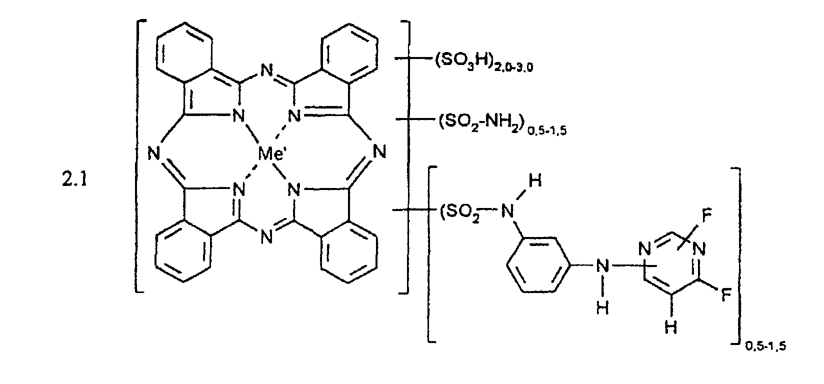 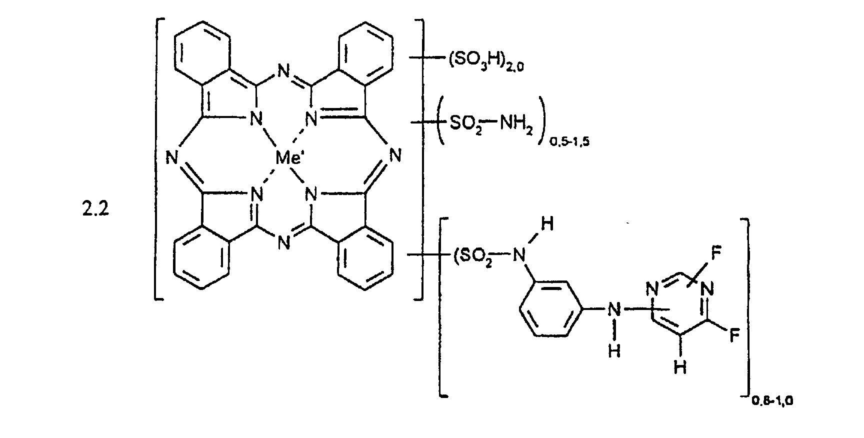 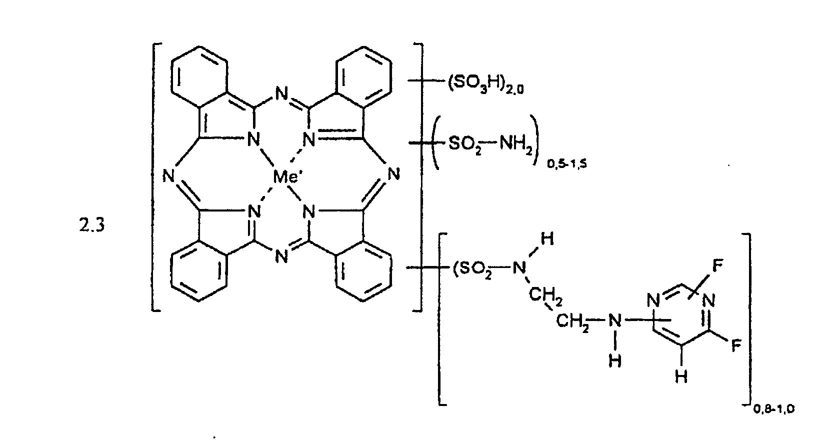 et le colorant réactif phtalocyaninemonochlorotriazinyle 3 correspond à l'une des formules 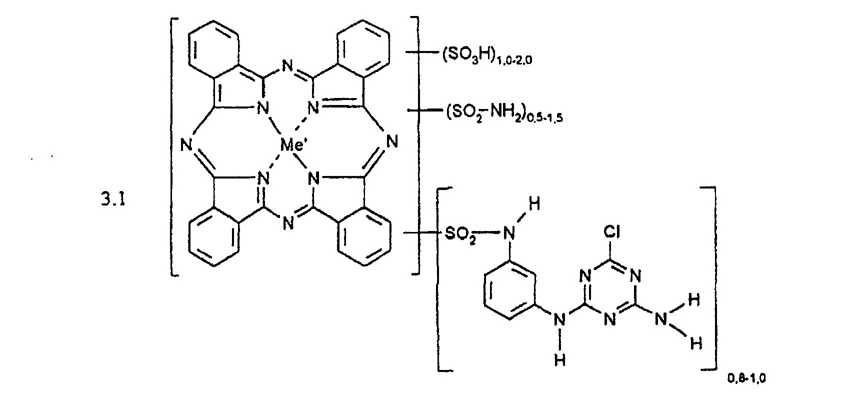 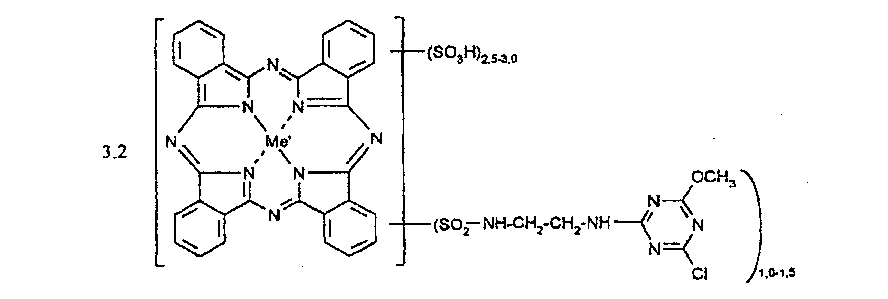 dans lesquelles
x = de 0,8 à 1,5
y = de 0,2 à 0,5
Me' = Cu ou Ni, indépendamment l'un de l'autre s'ils apparaissent plusieurs fois,
les nombres indiqués pour les substituants étant dans chaque cas des valeurs moyennes statistiques.

4. Mélange de colorants selon au moins l'une des revendications précédentes, **caractérisé en ce que** le mélange comprend de 30 à 70 % en poids du colorant 1, de 30 à 70 % en poids du colorant 2 et de 0 à 70 % en poids du colorant 3, par rapport à la teneur totale en colorants.

5. Mélange de colorants selon au moins l'une des revendications précédentes, **caractérisé en ce que** par partie de colorant, jusqu'à 50 parties d'un sel inorganique et d'un tampon qui produit un domaine tampon compris entre pH 6,5 à 7,5 sont présentes.

6. Mélange de colorants selon au moins l'une des revendications précédentes, **caractérisé en ce que** le mélange comprend de 0,5 à 10 parties en poids d'un agent dispersant organique anionique et 0,5 partie en poids d'un agent dépoussiérant, dans chaque cas par rapport à la totalité du mélange.

7. Procédé de teinture de fibres de cellulose, de fibres mixtes de cellulose avec un mélange de colorants réactifs, **caractérisé en ce que** l'on utilise un mélange selon au moins l'une des revendications précédentes.

8. Procédé selon la revendication 6, **caractérisé en ce que** la teinture est réalisée conformément au procédé par foulardage-enroulement à froid, au procédé par foulardage-vaporisage ou au procédé par épuisement.

9. Mélange de colorants selon la revendication 1,
**caractérisé en ce qu'**en plus du mélange de colorants réactifs phtalocyanine, un mélange de colorants jaunes réactifs est présent, lequel comprend au moins un ou plusieurs des colorants 4 à 6 suivants :

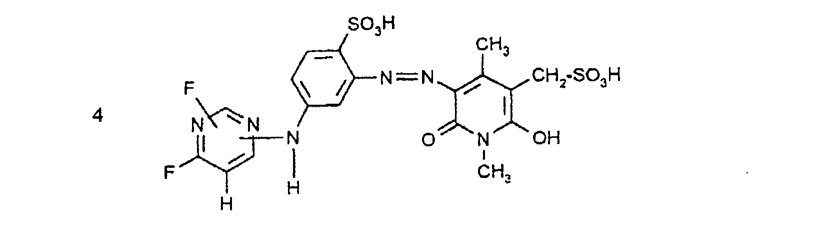

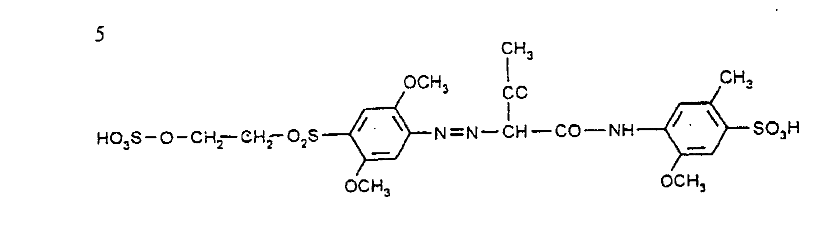

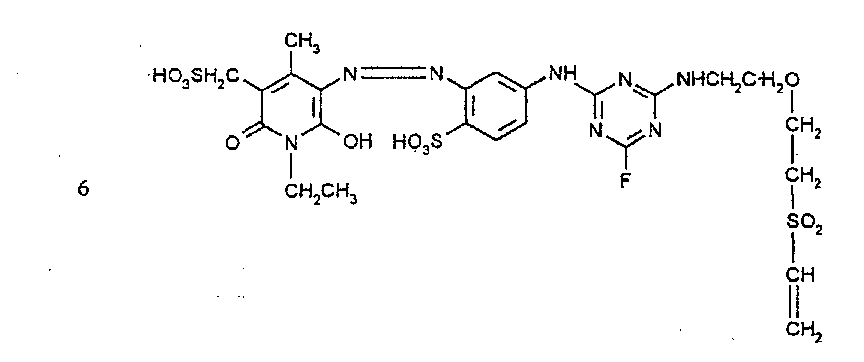

10. Mélange de colorants selon la revendication 1, **caractérisé en ce qu'**en plus du mélange de colorants réactifs phtalocyanine, un mélange de colorants jaunes réactifs est présent, lequel comprend au moins l'un des colorants 7 à 9 :

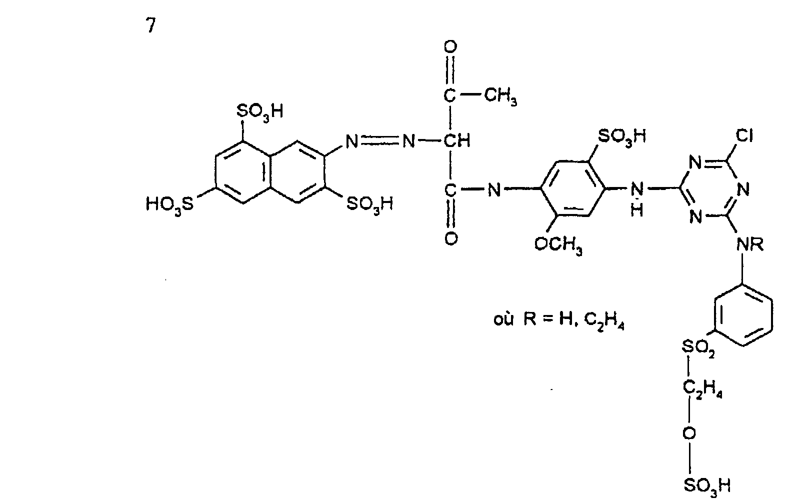

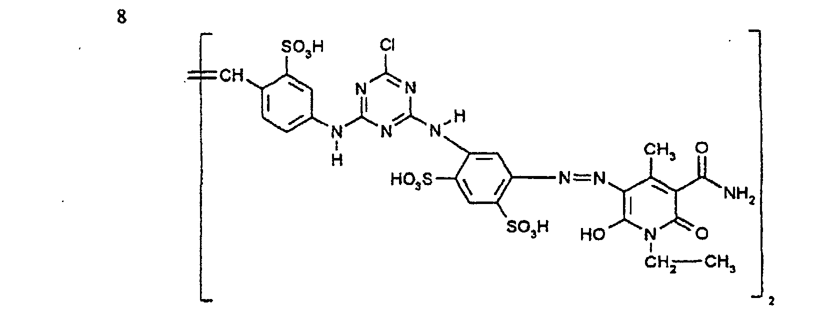

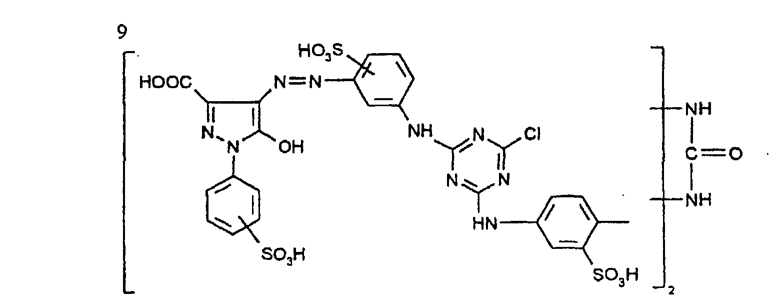

11. Textiles comprenant des fibres qui ont été teintes avec un mélange de colorants réactifs selon au moins l'une des revendications précédentes.
